(19) **Europäisches Patentamt / European Patent Office / Office européen des brevets**

(11) **EP 3 936 706 B1**

(12) **EUROPEAN PATENT SPECIFICATION**

(45) Date of publication and mention of the grant of the patent:
**25.02.2026 Bulletin 2026/09**

(21) Application number: **20767017.5**

(22) Date of filing: **05.03.2020**

(51) International Patent Classification (IPC):
**B01J 23/847** (2006.01)    **B01D 53/86** (2006.01)
**B01J 23/30** (2006.01)    **B01J 23/34** (2006.01)
**B01J 37/08** (2006.01)    **B01J 23/889** (2006.01)
**B01D 53/94** (2006.01)    **B01J 23/22** (2006.01)
**B01J 23/28** (2006.01)    **F01N 3/20** (2006.01)
**F01N 3/28** (2006.01)

(52) Cooperative Patent Classification (CPC):
**B01J 23/8472; B01D 53/8628; B01D 53/9418;**
**B01J 23/22; B01J 23/28; B01J 23/30; B01J 23/34;**
**B01J 23/8892; B01J 37/082; F01N 3/2066;**
**F01N 3/2803;** B01D 2251/2062; B01D 2255/2065;
B01D 2255/207; B01D 2255/20723;     (Cont.)

(86) International application number:
**PCT/JP2020/009543**

(87) International publication number:
**WO 2020/179892 (10.09.2020 Gazette 2020/37)**

(54) **COMBUSTION SYSTEM**

VERBRENNUNGSSYSTEM

SYSTÈME DE COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2019 PCT/JP2019/009201**
**07.03.2019 PCT/JP2019/009202**

(43) Date of publication of application:
**12.01.2022 Bulletin 2022/02**

(73) Proprietors:
- **The Chugoku Electric Power Co., Inc.**
  **Hiroshima-shi, Hiroshima 730-8701 (JP)**
- **Tokyo Metropolitan Public University Corporation**
  **Shinjuku-ku**
  **Tokyo 163-0926 (JP)**

(72) Inventors:
- **KIYONAGA, Eiji**
  **Hiroshima-shi, Hiroshima 730-8701 (JP)**
- **YOSHIDA, Kazuhiro**
  **Hiroshima-shi, Hiroshima 730-8701 (JP)**
- **MORITA, Keiichiro**
  **Hiroshima-shi, Hiroshima 730-8701 (JP)**
- **MURAYAMA, Toru**
  **Hachioji-shi, Tokyo 192-0397 (JP)**
- **HARUTA, Masatake**
  **Hachioji-shi, Tokyo 192-0397 (JP)**
- **HATA, Shinichi**
  **Hachioji-shi, Tokyo 192-0397 (JP)**
- **INOMATA, Yusuke**
  **Hachioji-shi, Tokyo 192-0397 (JP)**

(74) Representative: **HGF**
**HGF Europe LLP**
**Neumarkter Straße 18**
**81673 München (DE)**

(56) References cited:
WO-A1-2010/131636    WO-A1-2017/042895
CN-B- 103 623 814    JP-A- 2014 034 887
JP-A- H09 192 491    JP-B2- S6 410 202
KR-A- 20120 056 476    US-A1- 2019 055 871

**(Cont. next page)**

- **MEIQING SHEN: "New insight into the promotion effect of Cu dopedV2O5/WO3 TiO2 for low temperature NH3-SCRperformance", RSC ADVANCES, vol. 5, 7 April 2015 (2015-04-07), pages 35155 - 35165, XP002807856, DOI: 10.1039/C5RA04940G**
- **NAJBAR, M. ; GORA, A. ; BIALAS, A. ; WESELUCHA-BIRCZYNSKA, A: "Low-temperature reactivity of the surface species of vanadia-tungsta catalyst", SOLID STATE IONICS, vol. 141-142, 1 May 2001 (2001-05-01), NL , pages 499 - 506, XP027330175, ISSN: 0167-2738**

(52) Cooperative Patent Classification (CPC): (Cont.)
B01D 2255/2073; B01D 2255/20738;
B01D 2255/20753; B01D 2255/20761;
B01D 2255/20769; B01D 2255/20776;
B01D 2255/20792; B01D 2255/2094;
B01D 2255/9207; B01D 2257/404;
B01D 2258/0283; F01N 2370/02

**Description**

TECHNICAL FIELD

The present invention relates to a combustions system. In more detail, the present invention relates to a combustion system which purifies exhaust gas produced by fuel combusting, using a denitration catalyst.

BACKGROUND ART

As one of the pollutants emitted into air by the combustion of fuel, nitrogen oxides ($NO$, $NO_2$, $NO_3$, $N_2O$, $N_2O_3$, $N_2O_4$, $N_2O_5$) can be exemplified.
The nitrogen oxides induce acid rain, ozone layer depletion, photochemical smog, etc., and have a serious influence on the environment and human bodies; therefore, treatment thereof is an important problem.
As technology for removing the above-mentioned nitrogen oxides, the selective catalytic reduction reaction ($NH_3$-SCR) with ammonia ($NH_3$) as the reductant has been known.
As disclosed in Patent Document 1, a catalyst using titanium oxide as the carrier and supporting vanadium oxide is being widely used as the catalyst used in the selective catalytic reduction reaction. Titanium oxide has low activity for sulfur oxides, and has high stability; therefore, it is best established as the carrier.
On the other hand, although vanadium oxide plays a main role in $NH_3$-SCR, since it oxidizes $SO_2$ to $SO_3$, it has not been able to support on the order of 1 wt% or more of vanadium oxide.
In addition, with conventional $NH_3$-SCR, since the catalyst made by supporting vanadium oxide on a titanium oxide carrier almost does not react at low temperature, it must be used at high temperatures such as 350 to 400°C.
However, in order to raise the degrees of freedom of design in devices and facilities realizing $NH_3$-SCR and make more efficient, the development of a catalyst exhibiting high nitrogen oxide reduction rate activity at low temperatures has been demanded.
Subsequently, the present inventors have found a denitration catalyst in which vanadium pentoxide is present in at least 43 wt%, having a BET specific surface area of at least 30 $m^2$/g, and which can be used in denitration at 200°C or lower (Patent Document 2).
Patent Document 1: Japanese Unexamined Patent Application, Publication No. 2004-275852
Patent Document 2: Japanese Patent No. 6093101

Examples of catalysts for selective catalytic reduction of nitric oxides are described in CN103623814 B, US2019/055871 A1, JP2014/034887 A, KR2012/0056476 A and MEIQING SHEN: "New insight into the promotion effect of Cu dopedV2O5/ WO3 TiO2 for low temperature NH3-SCRperformance", RSC ADVANCES, vol. 5, 7 April 2015 (2015-04-07), pages 35155-35165, XP002807856, DOI: 10.1039/C5RA04940G

DISCLOSURE OF THE INVENTION

Problems to be Solved by the Invention

The present inventors, as a result of thorough research trying to achieve a further improvement of the above Patent Document 2, found a denitration catalyst exhibiting a more superior reduction rate activity of nitrogen oxides.
The present invention has an object of providing a combustion system made using a catalyst having better denitration efficiency at low temperature compared to the conventional technology, upon the selective catalytic reduction reaction with ammonia as the reductant. Means for Solving the Problems
The present invention relates to a combustion system including: a combustion device which combusts a fuel; an exhaust channel through which exhaust gas generated by the fuel combusting in the combustion device flows; a dust collector which is disposed in the exhaust channel, and collects ash dust in the exhaust gas; and a denitration device which is disposed in the exhaust channel, and removes nitrogen oxides from the exhaust gas by way of a denitration catalyst, in which the denitration device is disposed on a downstream side of the dust collector in the exhaust channel, and the denitration catalyst contains vanadium oxide as a main component in a content of at least 50 wt% by vanadium pentoxide conversion, a content by oxide conversion of a second metal is at least 1 wt% and no more than 40 wt%, the second metal is W, and the denitration catalyst further comprises Cu as a third metal.
In addition, it is preferable for the combustion system to further include: an air preheater disposed in the exhaust channel, and recovers heat from the exhaust gas, and the air preheater to be disposed on an upstream side of the dust collector.

In addition, the denitration catalyst preferably contains a composite oxide of vanadium and a second metal.

Effects of the Invention

A combustion system according to the present invention has better denitration efficiency at low temperature compared to the conventional technology, upon the selective catalytic reduction reaction with ammonia as the reductant.

BRIEF DESCRIPTION OF THE DRAWINGS

FIG. 1 is a graph showing NO conversion rates of vanadium catalysts containing a second metal, and a vanadium catalyst not containing a second metal, according to each of the Examples;

FIG. 2 is a graph showing NO conversion rates of vanadium catalysts containing cobalt and a vanadium catalyst not containing cobalt, according to each of the Examples;

FIG. 3 is a graph showing powder XRD patterns of vanadium catalysts containing cobalt according to each of the Examples and Comparative Examples;

FIG. 4 is a graph showing Raman spectra of vanadium catalysts containing cobalt according to each of the Examples;

FIG. 5A is a graph showing XPS spectra in the V2p region of vanadium catalysts containing cobalt according to each of the Examples and Comparative Examples;

FIG. 5B is a graph showing XPS spectra in the Co2p region of vanadium catalysts containing cobalt according to each of the Examples and Comparative Examples;

FIG. 6 is a graph showing NO conversion rates of vanadium catalysts containing tungsten and a vanadium catalyst not containing tungsten, according to each of the Examples;

FIG. 7 is a graph showing powder XRD patterns of vanadium catalysts containing tungsten according to each of the Examples and Comparative Examples;

FIG. 8 is a graph showing a proportion of tungsten element in vanadium catalysts containing tungsten, according to each of the Examples and Comparative Examples;

FIG. 9 is a graph showing NO conversion rates of vanadium catalysts containing tungsten and a vanadium catalyst not containing tungsten, according to each of the Examples;

FIG. 10 is a graph showing powder XRD patterns of vanadium catalysts containing tungsten according to each of the Examples and Comparative Examples;

FIG. 11 is a graph showing a proportion of tungsten element in vanadium catalysts containing tungsten, according to each of the Examples and Comparative Examples;

FIG. 12 is a graph showing NO conversion rates of vanadium catalysts containing tungsten and a vanadium catalyst not containing tungsten, according to each of the Examples;

FIG. 13 is a graph showing NO conversion rates of vanadium catalysts according to Examples of the present invention;

FIG. 14 is a graph showing the specific surface area of vanadium catalysts, according to Examples and Comparative Examples of the present invention;

FIG. 15 is a graph showing the transition in NO conversion rates of vanadium catalysts, according to Examples and Comparative Examples of the present invention;

FIG. 16 is a graph showing NOx conversion rates under a dry atmosphere and under a 10% moisture atmosphere of vanadium catalysts, according to Examples and Comparative Examples of the present invention;

FIG. 17 shows NO conversion rates for every reaction temperature of vanadium catalysts, according to Examples and Comparative Examples of the present invention;

FIG. 18 is a TEM image of a vanadium catalyst according to an Example of the present invention;

FIG. 19 is a TEM image of a vanadium catalyst according to an Example of the present invention;

FIG. 20 is a TEM image of a vanadium catalyst according to an Example of the present invention;

FIG. 21 is a TEM image of a vanadium catalyst according to a Comparative Example of the present invention;

FIG. 22 is a graph showing NO conversion rates of vanadium catalysts containing niobium and a vanadium catalyst not containing niobium, according to Examples of the present invention;

FIG. 23 is a graph showing NO conversion rates of vanadium catalysts containing carbon and cobalt according to Examples of the present invention, and a vanadium catalyst according to a Comparative Example;

FIG. 24 is a graph showing the NO conversion rates of vanadium catalysts according to Examples of the present invention;

FIG. 25 is a view showing the configuration of a combustion system according to a first application example of the present invention;

FIG. 26 is a view showing the configuration of a combustion system according to a second application example of the present invention;

FIG. 27 is a view showing the configuration of a combustion system according to a third application example of the present invention; and

FIG. 28 is a view showing the configuration of a combustion system according to a fourth application example of the present invention.

PREFERRED MODE FOR CARRYING OUT THE INVENTION

Hereinafter, a denitration catalyst according to an embodiment of the present invention will be explained.

A denitration catalyst of the present invention is a denitration catalyst containing vanadium oxide as a main component, and containing a second metal, in which content by oxide conversion of the second metal is at least 1 wt% and no more than 40 wt%, and the second metal is W.

Such a denitration catalyst can exhibit a high denitration effect even under a low temperature environment, compared to a denitration catalyst such as a vanadium/titanium catalyst which is conventionally used.

First, the denitration catalyst of the present invention establishes vanadium oxide as a main component.

This vanadium oxide includes vanadium pentoxide (V) ($V_2O_5$), and the V element of vanadium pentoxide ($V_2O_5$) may assume the pentavalent, tetravalent, trivalent and divalent form in the denitration reaction. It should be noted that this vanadium oxide is a main component of the denitration catalyst of the present invention, and may contain other substances within a range not inhibiting the effects of the present invention; however, it is present in at least 50 wt% by vanadium pentoxide conversion, in the denitration catalyst of the present invention.

More preferably, vanadium oxide is preferably present in at least 60 wt% by vanadium pentoxide conversion, in the denitration catalyst of the present invention.

Secondly, the denitration catalyst of the present invention contains vanadium oxide as a main component, and a second metal; however, by containing by such a second metal, it is possible to exhibit high denitration effect even under a low temperature environment, compared to a denitration catalyst such as a vanadium/titanium catalyst which is conventionally used.

If impurities get into the denitration catalyst of the present invention, the crystal structure will not be continuous since an amorphous portion is produced in the denitration catalyst, and a high denitration effect is exhibited by the lines and planes in the crystal lattice distorting; however, it is assumed that higher denitration effect is exhibited as the oxide of the second metal exists more abundantly as this impurity.

In the denitration catalyst of the present invention, by this second metal substituting the vanadium sites, this denitration catalyst either or both contains oxides of composite metal, or this denitration catalyst contains an oxide of the second metal.

In the selective catalytic reduction reaction at a reaction temperature of 200°C or less using a denitration catalyst having a content of cobalt oxide of 1 wt% to 10 wt%, when calculating the content by oxide conversion of second metal, it exhibited a NO conversion rate of 79% to 100% in the case of no moisture coexistence, and exhibited a NO conversion rate of 38% to 90% in the case of moisture coexisting.

On the other hand, in the selective catalytic reduction reaction at a reaction temperature of 200°C or less using a denitration catalyst having a content of cobalt oxide of 0 wt%, when calculating the content by oxide conversion of second metal, it only exhibited a NO conversion rate of 76% in the case of no moisture coexistence, and only exhibited a NO conversion rate of 32% in the case of moisture coexisting.

In an embodiment of the present invention, in the selective catalytic reduction reaction at a reaction temperature of 200°C or less using a denitration catalyst having a content of tungsten oxide of 12 wt% to 38 wt%, when calculating the content by oxide conversion of second metal, it exhibited a NO conversion rate of 83% to 96% in the case of no moisture coexistence, and exhibited a NO conversion rate of 43% to 55% in the case of moisture coexisting.

On the other hand, in the selective catalytic reduction reaction at 200°C or less using a denitration catalyst having a content of tungsten oxide of 0 wt% as the oxide of the second metal, it only exhibited a NO conversion rate of 90% in the case of no moisture coexistence, and only exhibited a NO conversion rate of 50% in the case of moisture coexisting.

In addition, in the selective catalytic reduction reaction at a reaction temperature of 200°C or less using a denitration catalyst having a content of tungsten oxide of 62 wt% to 100 wt%, when calculating the content by oxide conversion of second metal, it only exhibited a NO conversion rate of 3 to 69% in the case of no moisture coexistence, and only exhibited a NO conversion rate of 0% to 29% in the case of moisture coexisting.

In the selective catalytic reduction reaction using a denitration catalyst having a content of niobium oxide of 2 wt% to 16 wt%, when calculating the content by oxide conversion of second metal, it exhibited a NO conversion rate of 90% to 97% in the case of no moisture coexistence, and exhibited a NO conversion rate of 50% to 73% in the case of moisture coexisting.

In addition, in the aforementioned disclosure, the denitration catalyst of the present invention establishes the content by oxide conversion of the second metal as at least 1 wt% and no more than 40 wt%; however, it is preferably set as at least 2 wt% and no more than 38 wt%.

In addition, the content by oxide conversion of the second metal is preferably set as at least 2 wt% and no more than 10 wt%.

In addition, the content by oxide conversion of the second metal is preferably set as at least 2 wt% and no more than 7 wt%.

In addition, the content by oxide conversion of the second metal is preferably set as at least 2 wt% and no more than 7 wt%.

In addition, the content by oxide conversion of the second metal is preferably set as at least 3 wt% and no more than 7 wt%.

In addition, the content by oxide conversion of the second metal is preferably set as at least 3 wt% and no more than 5 wt%.

In addition, the content by oxide conversion of the second metal is preferably set as at least 3 wt% and no more than 4 wt%.

Thirdly, the second metal is W.

By W functioning as solid acids, and providing an absorption site for ammonia, it becomes possible for ammonia to efficiently contact with NO and react.

In the selective catalytic reduction reaction at a reaction temperature of 200°C or less using a denitration catalyst having a content of cobalt oxide of 3.1 wt%, when calculating the content by oxide conversion of second metal, it exhibited a NO conversion rate of 89.1% in the case of no moisture coexistence, and exhibited a NO conversion rate of 73.7% in the case of moisture coexisting.

In addition, in an embodiment of the present invention, in the selective catalytic reduction reaction at a reaction temperature of 200°C or less using a denitration catalyst having a content of tungsten oxide of 8.4 wt%, when calculating the content by oxide conversion of second metal, it exhibited a NO conversion rate of 100% in the case of no moisture coexistence, and exhibited a NO conversion rate of 92.2% in the case of moisture coexisting.

In the selective catalytic reduction reaction at a reaction temperature of 200°C or less using a denitration catalyst having a content of molybdenum oxide of 5.4 wt%, when calculating the content by oxide conversion of second metal, it exhibited a NO conversion rate of 91.2% in the case of no moisture coexistence, and exhibited a NO conversion rate of 71.3% in the case of moisture coexisting.

In the selective catalytic reduction reaction at a reaction temperature of 200°C or less using a denitration catalyst having a content of niobium oxide of 5.0 wt%, when calculating the content by oxide conversion of second metal, it exhibited a NO conversion rate of 96.2% in the case of no moisture coexistence, and exhibited a NO conversion rate of 68.8% in the case of moisture coexisting.

In the selective catalytic reduction reaction at a reaction temperature of 200°C or less using a denitration catalyst having a content of iron oxide of 3.1 wt%, when calculating the content by oxide conversion of second metal, it exhibited a NO conversion rate of 80.8% in the case of no moisture coexistence, and exhibited a NO conversion rate of 55.1% in the case of moisture coexisting.

In the selective catalytic reduction reaction at a reaction temperature of 200°C or less using a denitration catalyst having a content of nickel oxide of 2.9 wt%, when calculating the content by oxide conversion of second metal, it exhibited a NO conversion rate of 80.5% in the case of no moisture coexistence, and exhibited a NO conversion rate of 70.1% in the case of moisture coexisting.

In the selective catalytic reduction reaction at a reaction temperature of 200°C or less using a denitration catalyst having a content of copper oxide of 3.0 wt%, when calculating the content by oxide conversion of second metal, it exhibited a NO conversion rate of 98.8% in the case of no moisture coexistence, and exhibited a NO conversion rate of 81.0% in the case of moisture coexisting.

In the selective catalytic reduction reaction at a reaction temperature of 200°C or less using a denitration catalyst having a content of zinc oxide of 3.1 wt%, when calculating the content by oxide conversion of second metal, it exhibited a NO conversion rate of 85.8% in the case of no moisture coexistence, and exhibited a NO conversion rate of 65.4% in the case of moisture coexisting.

In the selective catalytic reduction reaction at a reaction temperature of 200°C or less using a denitration catalyst having a content of tin oxide of 5.6 wt%, when calculating the content by oxide conversion of second metal, it exhibited a NO conversion rate of 82.6% in the case of no moisture coexistence, and exhibited a NO conversion rate of 62.4% in the case of moisture coexisting.

In the selective catalytic reduction reaction at a reaction temperature of 200°C or less using a denitration catalyst having a content of cerium oxide of 6.4 wt%, when calculating the content by oxide conversion of second metal, it exhibited a NO conversion rate of 82.1% in the case of no moisture coexistence, and exhibited a NO conversion rate of 71.7% in the case of moisture coexisting.

In the selective catalytic reduction reaction at a reaction temperature of 200°C or less using a denitration catalyst having a content of manganese dioxide of 3.3 wt%, when calculating the content by oxide conversion of second metal, it exhibited a NO conversion rate of 86.0% in the case of no moisture coexistence, and exhibited a NO conversion rate of 66.0% in the case of moisture coexisting.

On the other hand, in the selective catalytic reduction reaction at 200°C or less using a denitration catalyst not containing an oxide of the second metal, it only exhibited a NO conversion rate of 82.3% in the case of no moisture coexistence, and exhibited a NO conversion rate of 47.2% in the case of moisture coexisting.

In addition, in the denitration catalyst used in the combustion system of the present invention, the second metal is W.

Although a repeat of the above, in the embodiment of the present invention, in the selective catalytic reduction reaction at a reaction temperature of 200°C or less using a denitration catalyst having a content of tungsten oxide of 8.4 wt%, when calculating the content by oxide conversion of second metal, it exhibited a NO conversion rate of 100% in the case of no moisture coexistence, and exhibited a NO conversion rate of 92.2% in the case of moisture coexisting. On the other hand, in the selective catalytic reduction reaction at a reaction temperature of 200°C or less using a denitration catalyst not containing a second metal, it only exhibited a NO conversion rate of 82.3% in the case of no moisture coexistence, and exhibited a NO conversion rate of 47.2% in the case of moisture coexisting.

In addition, the denitration catalyst used in the combustion system of the present invention further contains Cu as a third metal.

In the embodiment of the present invention, in the selective catalytic reduction reaction at a reaction temperature of 200°C or less using a denitration catalyst having a content of $WO_3$ of 8.4 wt% and a content of CuO of 3.0 wt%, when calculating the content by oxide conversion of the second and third metals, it exhibited a NO conversion rate of 89.2% in the case of no moisture coexistence, and exhibited a NO conversion rate of 79.2% in the case of moisture coexisting. It should be noted that the upper limit for the content of CuO is 13 wt%.

In addition, the denitration catalyst used in the combustion system of the present invention desirably contains oxides of composite metal of vanadium and the second metal.

In the embodiment of the present invention, in the selective catalytic reduction reaction at a reaction temperature of 150°C using a denitration catalyst produced using metatungstic acid as a precursor, when using a denitration catalyst having a total weight ratio of $WO_3$ of 2.5 wt% to 11.8 wt% in the case of oxide converting the content ratio of W, it exhibited a NO conversion rate of 85% to 100%% in the case of no moisture coexistence, and exhibited a NO conversion rate of 62% to 92% in the case of moisture coexisting. On the other hand, although a repeat of the above, in the selective catalytic reduction reaction at a reaction temperature of 200°C or less using a denitration catalyst not containing a second metal, it only exhibited a NO conversion rate of 82.3% in the case of no moisture coexistence, and exhibited a NO conversion rate of 47.2% in the case of moisture coexisting. From the TEM image of this denitration catalyst produced using metatungstic acid as a precursor, it was shown that the V site in the crystal lattice of vanadium pentoxide is substituted by W, i.e. V is isolated in atomic form, and this denitration catalyst contains oxides of a composite metal of V and W.

In addition, the denitration catalyst of the present invention is preferably used in denitration at 300°C or lower. This is because the firing temperature of the denitration catalyst of the present invention is 300°C. On the other hand, in the Examples described later, the denitration catalyst of the present invention exhibits high denitration effect in the selective catalytic reduction reaction at a reaction temperature of 200°C or less; therefore, the denitration catalyst of the present invention can be used in denitration at 200°C or less. Since oxidation from $SO_2$ to $SO_3$ does not occur at 200°C or lower, oxidation of $SO_2$ to $SO_3$ is not accompanying upon the selective catalytic reduction reaction, as in the knowledge obtained by Patent Document 2 described above.

In addition, in the aforementioned description, the denitration catalyst of the present invention is preferably used in denitration at 300°C or lower; however, it may preferably be used in denitration at 200°C or lower, or may be more preferably used in denitration at a reaction temperature of 100 to 200°C. More preferably, it may be used in denitration at a reaction temperature of 160 to 200°C. Alternatively, it may be used in denitration at a reaction temperature of 80 to 150°C.

In addition, the denitration catalyst of the present invention more preferably contains carbon. Above all, the carbon content is preferably at least 0.05 wt% and no more than 3.21 wt%. It should be noted that the carbon content may preferably be at least 0.07 wt% to no more than 3.21 wt%. More preferably, the carbon content may be at least 0.11 wt% to no more than 3.21 wt%. More preferably, the carbon content may be at least 0.12 wt% to no more than 3.21 wt%. More preferably, the carbon content may be at least 0.14 wt% to no more than 3.21 wt%. More preferably, the carbon content may be at least 0.16 wt% to no more than 3.21 wt%. More preferably, the carbon content may be at least 0.17 wt% to no more than 3.21 wt%. More preferably, the carbon content may be at least 0.70 wt% to no more than 3.21 wt%. By containing carbon, it is possible to exhibit high denitration effect even in a low temperature environment, compared to a denitration catalyst such as a vanadium/titanium catalyst which is conventionally used. If impurities get into the denitration catalyst of the present invention, the crystal structure will not be continuous since the amorphous portion is produced in the denitration catalyst, a high denitration effect is exhibited by the lines and planes in the crystal lattice distorting; however, it is assumed that higher denitration effect is exhibited by carbon existing as this impurity.

Hereinafter, a method is shown for preparing a denitration catalyst with vanadium oxide as a main component, in which the content by oxide conversion of the second metal is at least 1 wt% and no more than 40 wt%, and the second metal is W.

The preparation method of the above-mentioned denitration catalyst includes a step of firing a mixture of vanadate, chelate compound and a compound of the second metal.

As the vanadate, for example, ammonium vanadate, magnesium vanadate, strontium vanadate, barium vanadate, zinc vanadate, lead vanadate, lithium vanadate, etc. may be used.

In addition, as the chelate compound, one having a plurality of carboxyl groups such as oxalic acid and citric acid, one having a plurality of amino groups such as acetylacetone and ethylenediamine, one having a plurality of hydroxyl groups such as ethylene glycol, etc. may be used.

In addition, the compound of the second metal may be a chelate complex, hydrate, ammonium compound, or phosphate compound.

The chelate complex may be a complex of oxalic acid, citric acid or the like, for example.

The hydrate may be $(NH_4)_{10}W_{12}O_{41} \cdot 5H_2O$ or $H_3PW_{12}O_{40} \cdot nH_2O$, for example.

The ammonium compound may be $(NH_4)_{10}W_{12}O_{41} \cdot 5H_2O$, for example.

The phosphate compound may be $H_3PW_{12}O_{40} \cdot nH_2O$, for example.

In addition, it is preferable for ethylene glycol to be further contained in the above-mentioned mixture.

The denitration catalyst produced by these methods can exhibit high denitration effect under a low temperature atmosphere, compared to a denitration catalyst such as a vanadium/titanium catalyst which is conventionally used.

If impurities get into the denitration catalyst of the present invention, the crystal structure will not be continuous since the amorphous portion is produced in the denitration catalyst, a high denitration effect is exhibited by the lines and planes in the crystal lattice distorting; however, it is assumed that higher denitration effect is exhibited as the carbon exists more abundantly as this impurities.

In the embodiment of the present invention, the denitration catalyst produced by the method firing a mixture of ammonium vanadate, oxalic acid and an oxalic acid complex of the second metal exhibited a NO conversion rate of 80.5% to 100% in the case of no moisture coexistence, and exhibited a NO conversion rate of 55.1% to 92.2% in the case of moisture coexisting.

In addition, the denitration catalyst produced by a method in which ethylene glycol is further included in the above-mentioned mixture exhibited a NO conversion rate of 100% in the case of no moisture coexistence, and exhibited a NO conversion rate of 89% in the case of moisture coexisting.

On the other hand, as the denitration catalyst produced by a method not including such a step, for example, the denitration catalyst produced by a method mixing ammonium vanadate and oxalic acid, but firing without mixing an oxide of the second metal, only exhibited a NO conversion rate of 82.3% in the case of no moisture coexistence, and exhibited a NO conversion rate of 47.2% in the case of moisture coexisting.

In addition, the above-mentioned firing is preferably performed at a temperature no higher than 270°C.

During production of the denitration catalyst according to the present embodiment, by firing at a temperature no higher than 270°C, which is a low temperature compared to the usual 300°C, the structure of the vanadium pentoxide crystals contained in this denitration catalyst is locally distorted, and can exhibit a high denitration effect; however, it is assumed that, above all, high denitration effect is exhibited by sites appearing at which an oxygen atom is deficient in the crystal structure of vanadium pentoxide.

It should be noted that "sites at which an oxygen atom is deficient" is also designated as "oxygen defect site".

The denitration catalyst prepared in this way is a denitration catalyst establishing vanadium oxide as a main component, in which content of oxide of the second metal is at least 1 wt% and no more than 40 wt%, and the second metal is W.

It should be noted that the present invention is not to be limited to the above embodiment, and that modifications, improvements, etc. within a scope that can achieve the object of the present invention are also encompassed by the present invention.

EXAMPLES

Hereinafter, Examples of the present invention will be specifically explained together with Comparative Examples.

It should be noted that the present invention is not to be limited by these Examples.

1 Vanadium Catalyst Containing Various Metals as Second Metal

1.1 Each Example and Comparative Example

[Example 1 - not according to the invention]

A precursor complex was synthesized by dissolving 4.96 g (42.4 mmol) of ammonium vanadate ($NH_4VO_3$) and

11.5 g (127.6 mmol) of oxalic acid ($(COOH)_2$) in pure water.

To this precursor complex, oxalic acid complex of cobalt (Co), which is the second metal, was added, so that the cobalt (Co) becomes 3.5 mol% by metallic atom conversion, i.e. $Co_3O_4$ becomes 3.1 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing cobalt (Co) was obtained.

[Example 2 - according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, oxalic acid complex of tungsten (W), which is the second metal, was added, so that the tungsten (W) becomes 3.5 mol% by metallic atom conversion, i.e. $WO_3$ becomes 8.4 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing tungsten (W) was obtained.

[Example 3 - not according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, oxalic acid complex of molybdenum (Mo), which is the second metal, was added, so that the molybdenum (Mo) becomes 3.5 mol% by metallic atom conversion, i.e. $MoO_3$ becomes 5.4 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing molybdenum (Mo) was obtained.

[Example 4 - not according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, oxalic acid complex of niobium (Nb), which is the second metal, was added, so that the niobium (Nb) becomes 3.5 mol% by metallic atom conversion, i.e. $Nb_2O_5$ becomes 5.0 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing niobium (Nb) was obtained.

[Example 5 - not according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, oxalic acid complex of iron (Fe), which is the second metal, was added, so that the iron (Fe) becomes 3.5 mol% by metallic atom conversion, i.e. $Fe_2O_3$ becomes 3.1 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing iron (Fe) was obtained.

[Example 6 - not according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, 0.113 g of nickel (Ni), which is the second metal, was added as nickel carbonate, so that the nickel (Ni) becomes 3.5 mol% by metallic atom conversion, i.e. NiO becomes 2.9 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing nickel (Ni) was obtained.

[Example 7 - not according to the invention]

A precursor complex was synthesized by dissolving 4.96 g (42.4 mmol) of ammonium vanadate ($NH_4VO_3$) and 11.5 g (127.6 mmol) of oxalic acid ($(COOH)_2$) in pure water.

To this precursor complex, oxalic acid complex of copper (Cu), which is the second metal, was added, so that the copper (Cu) becomes 3.5 mol% by metallic atom conversion, i.e. CuO becomes 3.0 wt% by metal oxide conversion.

By firing the obtained vanadium-dissimilar metal complex mixture twice for 4 hours at a temperature of 300°C by an electric furnace, a denitration catalyst of vanadium pentoxide ($V_2O_5$) containing copper (Cu) was obtained.

[Example 8 - not according to the invention]

A precursor complex was synthesized by dissolving 4.96 g (42.4 mmol) of ammonium vanadate ($NH_4VO_3$) and 11.5 g (127.6 mmol) of oxalic acid (($COOH)_2$) in pure water.
To this precursor complex, oxalic acid complex of zinc (Zn), which is the second metal, was added, so that the zinc (Zn) becomes 3.5 mol% by metallic atom conversion, i.e. ZnO becomes 3.1 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing zinc (Zn) was obtained.

[Example 9 - not according to the invention]

A precursor complex was synthesized by dissolving 4.96 g (42.4 mmol) of ammonium vanadate ($NH_4VO_3$) and 11.5 g (127.6 mmol) of oxalic acid (($COOH)_2$) in pure water.
To this precursor complex, oxalic acid complex of tin (Sn), which is the second metal, was added, so that the tin (Sn) becomes 3.5 mol% by metallic atom conversion, i.e. $SnO_2$ becomes 5.6 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing tin (Sn) was obtained.

[Example 10 - not according to the invention]

A precursor complex was synthesized by dissolving 4.96 g (42.4 mmol) of ammonium vanadate ($NH_4VO_3$) and 11.5 g (127.6 mmol) of oxalic acid (($COOH)_2$) in pure water.
To this precursor complex, oxalic acid complex of cerium (Ce), which is the second metal, was added, so that the cerium (Ce) becomes 3.5 mol% by metallic atom conversion, i.e. $CeO_2$ becomes 6.4 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing cerium (Ce) was obtained.

[Example 11 - not according to the invention]

A precursor complex was synthesized by dissolving 4.96 g (42.4 mmol) of ammonium vanadate ($NH_4VO_3$) and 11.5 g (127.6 mmol) of oxalic acid (($COOH)_2$) in pure water.
To this precursor complex, oxalic acid complex of manganese (Mn), which is the second metal, was added, so that the manganese (Mn) becomes 3.5 mol% by metallic atom conversion, i.e. $MnO_2$ becomes 3.3 wt% by metal oxide conversion.
By firing the obtained vanadium-dissimilar metal complex mixture twice for 4 hours at a temperature of 300°C by an electric furnace, a denitration catalyst of vanadium pentoxide ($V_2O_5$) containing manganese (Mn) was obtained.

[Comparative Example 1 - not according to the invention]

A precursor complex was synthesized by dissolving 4.96 g (42.4 mmol) of ammonium vanadate ($NH_4VO_3$) and 11.5 g (127.6 mmol) of oxalic acid (($COOH)_2$).
By firing this precursor complex twice for 4 hours at a temperature of 300°C by an electric furnace, a denitration catalyst of vanadium pentoxide ($V_2O_5$) not containing the second metal was obtained.

1.2 Evaluation

1.2.1 NO Conversion Rate

Under the conditions of Table 1 below, the $NH_3$-SCR reaction was conducted using a fixed bed flow-type reactor at a reaction temperature of 150°C.
In the gas passing through the catalyst layer, NO was analyzed by a Jasco FT-IR-4700.

[Table 1]

(Table 1) $NH_3$-SCR measurement conditions

| | |
|---|---|
| Reaction temperature | 150°C |

(continued)

(Table 1) NH$_3$-SCR measurement conditions

| | |
|---|---|
| Catalyst amount | 0.375g |
| Gas flow rate | 250mlmin$^{-1}$ |
| | NO: 250ppm, NH$_3$: 250ppm, O$_2$: 4vol% in Ar, 10% H$_2$O (steam atmosphere) |
| Space velocity | 40,000 mLh$^{-1}$g$_{cat}^{-1}$ |

In addition, the NO conversion rate was calculated by Formula (1) noted below.
It should be noted that No$_{in}$ is the NO concentration at the reaction tube inlet, and NO$_{out}$ is the NO concentration of the reaction tube outlet.

Formula 1

$$\text{NO conversion rate } [\%] = \frac{\text{NO}_{in} - \text{NO}_{out}}{\text{NO}_{in}} \times 100 \quad \text{(Formula 1)}$$

(Measurement Results)

Table 2 shows the NO conversion rates of each vanadium pentoxide catalyst for both a case of moisture not coexisting and the case of coexistence of moisture.

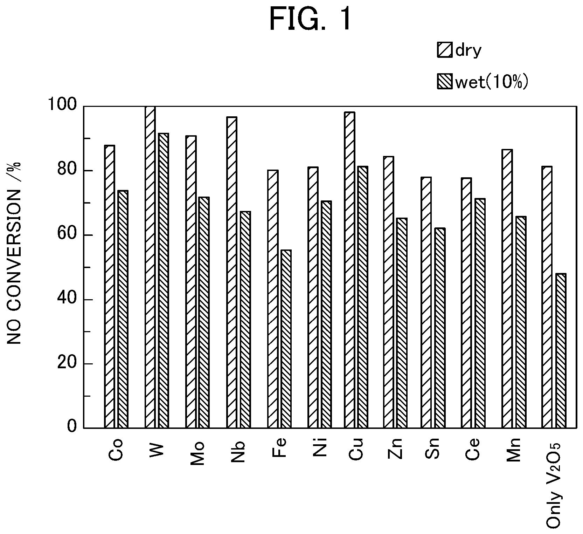

FIG. 1 is a plot graphing this Table 2.

[Table 2]

(Table 2) NOx conversion rate of vanadium pentoxide catalyst

| Sample | | NO conversion rate/% | |
|---|---|---|---|
| | | dry | wet(10%) |
| Example1 | (Co) | 89.1 | 73.7 |
| Example2 | (W) | 100 | 92.2 |
| Example3 | (Mo) | 91.2 | 71.3 |
| Example4 | (Nb) | 96.2 | 68.8 |
| Example5 | (Fe) | 80.8 | 55.1 |
| Example6 | (Ni) | 80.5 | 70.1 |
| Example7 | (Cu) | 98.8 | 81.0 |
| Example8 | (Zn) | 85.8 | 65.4 |
| Example9 | (Sn) | 82.6 | 62.4 |
| Example10 | (Ce) | 82.1 | 71.7 |
| Example11 | (Mn) | 86.0 | 66.0 |
| Comparative Example1 | (Only V$_2$O$_5$) | 82.3 | 47.2 |

In both the case of moisture not coexisting and the case of the 10% steam atmosphere, the denitration catalyst of the Examples generally exhibited higher NO conversion rate than the denitration catalyst of the Comparative Examples.
Above all, the denitration catalyst made by adding cobalt, tungsten, molybdenum, niobium, copper, zinc or manganese to ammonium vanadate exhibited a high NO conversion rate.
Thereamong, Example 2 (adding tungsten) exhibited the highest NO conversion rate, in both the case of moisture not coexisting and the case of moisture coexisting.
In addition, under the conditions of Table 3 below, the NH$_3$-SCR reaction was conducted using a fixed bed flow-type reactor at a reaction temperature of 150°C.
In the gas passing through the catalyst layer, NO was analyzed by a Jasco FT-IR-4700.

[Table 3]

(Table 3) NH$_3$-SCR measurement conditions

| | |
|---|---|
| Reaction temperature | 150°C |
| Catalyst amount | 0.375g |
| Gas flow rate | 250mlmin$^{-1}$ |
| | NO: 250ppm, NH$_3$: 250ppm, O$_2$: 4vol% in Ar, 2.3% H$_2$O (steam atmosphere) |
| Space velocity | 40,000 mLh$^{-1}$g$_{cat}$$^{-1}$ |

(Measurement Results)

Table 4 shows the NO conversion rates of each vanadium pentoxide catalyst for both a case of moisture not coexisting and the case of a 2.3% steam atmosphere.

[Table 4]

(Table 4) NOx conversion rate of vanadium pentoxide catalyst

| Sample | | NO conversion rate/% | |
|---|---|---|---|
| | | dry | wet(2.3%) |
| Example1 | (Co) | 94.6 | 69.4 |
| Example2 | (W) | 92.0 | 64.0 |
| Example3 | (Mo | 97.0 | 62.0 |
| Example4 | (Nb) | 96.7 | 61.7 |
| Example5 | (Ce) | 89.8 | 52.9 |
| Example6 | (Sn) | 88.1 | 45.5 |
| Example7 | (Fe) | 74.5 | 33.9 |
| Comparative Example1 | (None) | 75.5 | 32.0 |

In both a case of moisture not coexisting and the case of a 2.3% steam atmosphere, the denitration catalysts of the Examples generally exhibited a higher NO conversion rate than the denitration catalysts of the Comparative Examples. Above all, the denitration catalyst made by adding cobalt, tungsten, molybdenum, or niobium, to ammonium vanadate exhibited a high NO conversion rate.

Thereamong, for the case of moisture not coexisting, Example 3 (adding molybdenum) exhibited the highest NO conversion rate, and for the case of moisture coexisting, Example 1 (adding cobalt) exhibited the highest NO conversion rate.

2 Vanadium Catalyst Containing Cobalt as Second Metal

2.1 Each Example

As mentioned above, for the vanadium catalysts of Examples 1 to 11, in the case of moisture coexisting, since Example 1 (adding cobalt) exhibited relative high NO conversion rate, the vanadium catalyst according to each of the Examples below were produced by varying the additive amount of cobalt.

[Example 12 - not according to the invention]

A precursor complex was synthesized by dissolving ammonium vanadate (NH$_4$VO$_3$) and oxalic acid ((COOH)$_2$) in pure water.

To this precursor complex, oxalic acid complex of cobalt (Co), which is the second metal, was added, so that Co$_3$O$_4$ becomes 1 wt% by metal oxide conversion.

By firing the obtained vanadium-cobalt complex mixture twice for 4 hours at a temperature of 300°C by an electric furnace, a denitration catalyst of vanadium pentoxide (V$_2$O$_5$) containing cobalt (Co) was obtained.

[Example 13 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 3 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 14 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 5 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 15 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 6 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 16 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 7 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 17 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 8 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.

[Example 18 - not according to the invention]

A precursor complex was synthesized by dissolving ammonium vanadate ($NH_4VO_3$) and oxalic acid ($(COOH)_2$) in pure water.
To this precursor complex, oxalic acid complex of cobalt (Co), which is the second metal, was added, so that $Co_3O_4$ becomes 10 wt% by metal oxide conversion.
By firing the obtained vanadium-cobalt complex mixture twice for 4 hours at a temperature of 300°C by an electric furnace, a denitration catalyst of vanadium pentoxide ($V_2O_5$) containing cobalt (Co) was obtained.
It should be noted that Table 5 below shows the charging amount of precursor during cobalt introduction in Examples 12 to 18.

[Table 5]

(Table 5) Charging amount of precursor during cobalt introduction

|  | Co$_3$O$_4$ wt% | Co complex/mmol | Co complex/g | NH$_4$VO$_3$/mmol | NH$_4$VO$_3$/g | Oxalic acid/mmol | Oxalic acid/g |
|---|---|---|---|---|---|---|---|
| Comparative Example1 | 0 | 0 | 0 | 43.9 | 5.13 | 131.7 | 11.86 |
| Example12 | 1 | 0.48 | 0.23 | 43.4 | 5.07 | 130.26 | 11.73 |
| Example13 | 3 | 1.52 | 0.74 | 42.4 | 4.96 | 127.14 | 11.45 |
| Example14 | 5 | 2.52 | 1.23 | 41.4 | 4.84 | 124.14 | 11.18 |
| Example15 | 6 | 2.88 | 1.4 | 41 | 4.8 | 123.07 | 11.08 |
| Example16 | 7 | 3.4 | 1.63 | 40.5 | 4.74 | 121.63 | 10.95 |
| Example17 | 8 | 3.83 | 1.87 | 40.1 | 4.69 | 120.19 | 10.82 |
| Example18 | 10 | 5.75 | 2.33 | 39.1 | 4.57 | 117.31 | 10.56 |

2.2 Evaluation

2.2.1 NO Conversion Rate

(Measurement Method)

Under the conditions of the above Table 3, the NH$_3$-SCR reaction was conducted using a fixed bed flow-type reactor at a reaction temperature of 150°C.
In the gas passing through the catalyst layer, NO was analyzed by a Jasco FT-IR-4700.
In addition, the NO conversion rate was calculated by Formula (1) above.

(Measurement Results)

Table 6 shows the NO conversion rates for both the case of moisture not coexisting and the case under coexistence of moisture of each vanadium oxide catalyst.

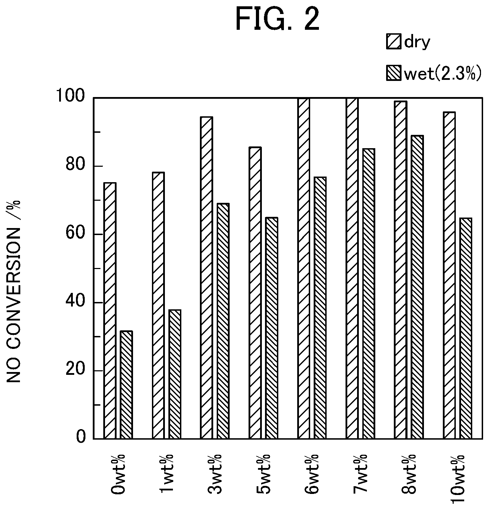

FIG. 2 is a plot graphing this Table 6.

[Table 6]

(Table 6) NOx conversion rate of vanadium pentoxide catalyst

| Sample | | NO conversion rate/% | |
|---|---|---|---|
|  |  | dry | wet(2.3%) |
| Comparative Example 1 | (None) | 76 | 32 |
| Example12 | (1wt%) | 79 | 38 |
| Example13 | (3wt%) | 94 | 69 |
| Example14 | (5wt%) | 95 | 65 |
| Example15 | (6wt%) | 100 | 77 |
| Example16 | (7wt%) | 100 | 86 |
| Example17 | (8wt%) | 99 | 90 |
| Example18 | (10wt%) | 96 | 65 |

In both the case of moisture not coexisting and the case under coexistence of moisture, the denitration catalyst of the Examples shows higher NO conversion rate than the denitration catalyst of the Comparative Example.
Above all, in the case of moisture not coexisting, Example 15 (6 wt%) and Example 16 (7 wt%) showed the highest NO conversion rates, and in the case of moisture coexisting, Example 17 (8 wt%) showed the highest NO conversion rate.

2.2.2 Powder X-ray Diffraction

(Analysis Method)

As power X-ray diffraction, measurement was performed using Cu-K$\alpha$ by a Rigaku Smart Lab.

(Analysis Results)

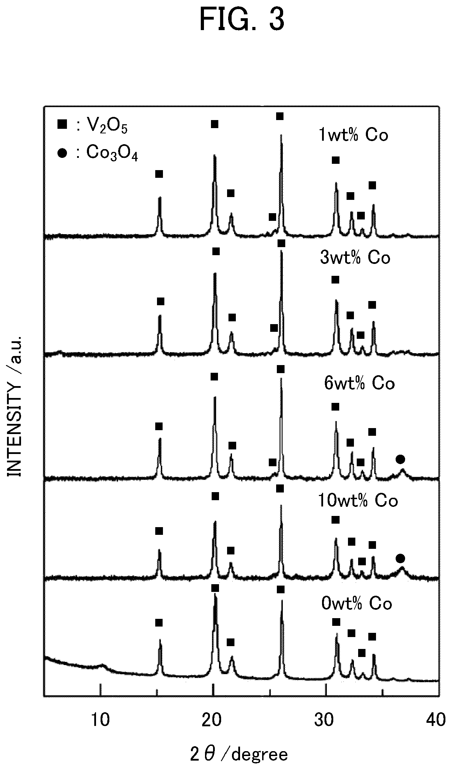

FIG. 3 shows the powder XRD (X-Ray Diffraction) patterns of Example 12 (1 wt%), Example 13 (3 wt%), Example 15 (6 wt%), Example 18 (10 wt%) and Comparative Example 1 (None: 0 wt%).
It showed that, when $V_2O_5$ which is the stabilized phase exists as the main component, and raising the added amount of Co, the $Co_3O_4$ phase also appeared.

2.2.3 Raman Spectrum

(Measurement Method)

In order to analyze the crystal structure of each vanadium pentoxide catalyst, the Raman spectra was measured by Raman spectroscopy.
In more detail, a small amount of a sample of each catalyst was placed on a slide of glass, and the Raman spectra were measured by a Raman spectrometer.
As the measurement apparatus, an NRS-4100 Raman spectrophotometer manufactured by JASCO Corp. was used.

(Measurement Results)

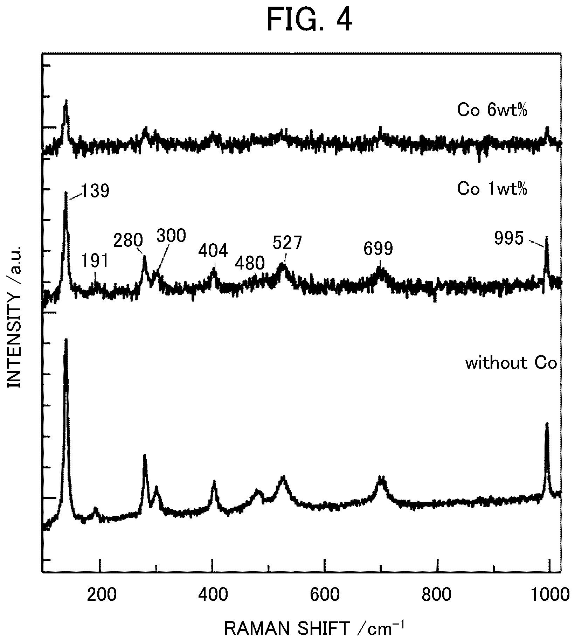

FIG. 4 shows the Raman spectra of each catalyst.
It is shown that, when raising the added amount of Co, the crystal structure of $V_2O_5$ collapses, and the pattern intensity weakens.

2.2.4 X-ray Photoelectron Spectrum (XPS) Measurement

(Measurement Method)

For Example 12 (1 wt%), Example 13 (3 wt%), Example 15 (6 wt%), Example 18 (10 wt%) and Comparative Example 1 (None: 0 wt%), the X-ray photoelectron spectra (XPS: X-ray photoelectron spectrum) were measured in order to analyze the electronic state.
In more detail, powder samples of each catalyst of the Examples and Comparative Examples were fixed to a sample holder using carbon tape, and the X-ray photoelectron spectrum was measured.
As the measurement device, a JPS-9010MX photoelectron spectrometer manufactured by JEOL Ltd. was used.

(Measurement Results)

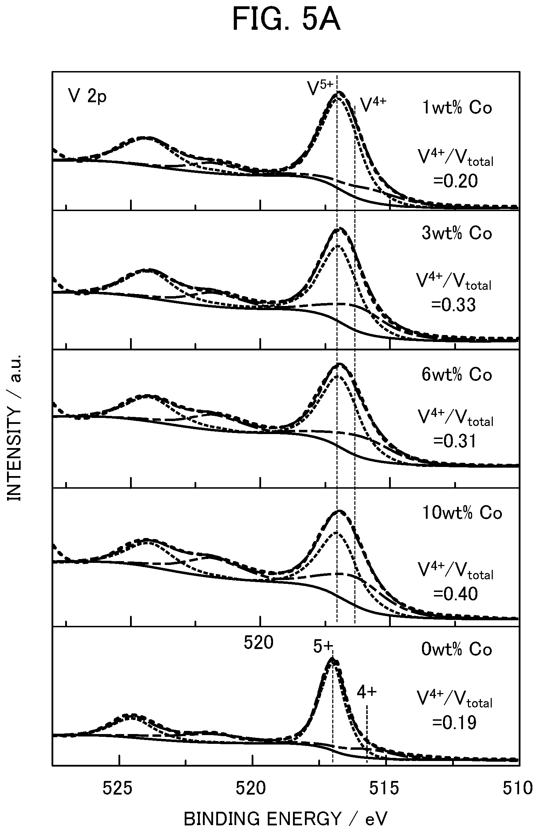

FIG. 5A shows the XPS spectra in the V2p region.

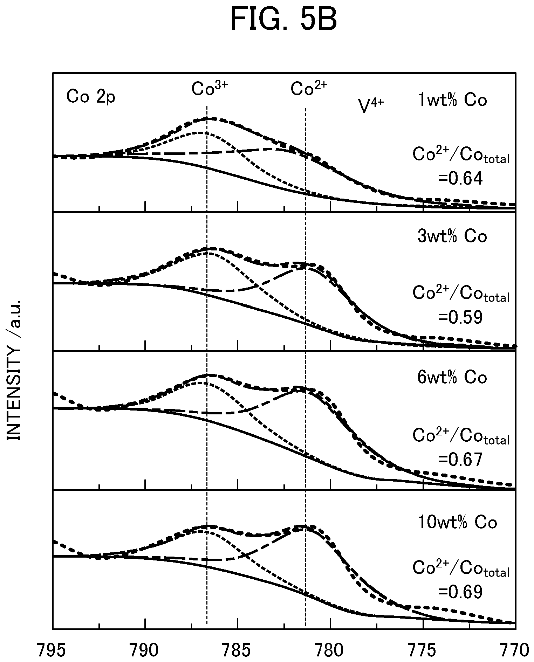

FIG. 5B shows the XPS spectra in the Co2p region.
When raising the added amount of Co, it is shown that $V^{4+}$ and $Co^{2+}$ components increased.

3 Vanadium Catalyst Containing Tungsten as Second Metal

3.1 Case of Varying Added Amount of Tungsten

3.1.1 Each Example

As mentioned above, for the vanadium catalysts of Examples 1 to 11, in both the case of moisture not coexisting and the case of moisture coexisting, since Example 2 (adding tungsten) showed the highest NO conversion rate, the vanadium catalysts according to each of the below Examples were produced by varying the added amount of tungsten.
It should be noted that, not only was the added amount of tungsten simply varied, the added amount of tungsten was varied for each of the cases of using $K_2WO_4$ and cases of using $H_3PW_{12}O_{40}\cdot nH_2O$ as the precursor, as described later.

**EP 3 936 706 B1**

[Example 19 - not according to the invention]

To a mixture of ammonium vanadate ($NH_4VO_3$), 43.9 mmol of $K_2WO_4$ and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio by metal oxide ($WO_3$) conversion became 4.9 wt%.

[Example 20 - not according to the invention]

To a mixture of ammonium vanadate ($NH_4VO_3$), 43.9 mmol of $K_2WO_4$ and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio by metal oxide ($WO_3$) conversion became 11.8 wt%.

[Example 21 - not according to the invention]

To a mixture of ammonium vanadate ($NH_4VO_3$), 43.9 mmol of $K_2WO_4$ and 20 ml of pure water, 11.9 g (131.7 mmol) of oxalic acid was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio by metal oxide ($WO_3$) conversion became 22.1 wt%.

[Comparative Example 2 - not according to the invention]

To a mixture of ammonium vanadate ($NH_4VO_3$), 43.9 mmol of $K_2WO_4$ and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio by metal oxide ($WO_3$) conversion became about 100 wt%.
It should be noted that Table 7 below shows the charging amount of precursor during tungsten introduction in Examples 19 to 21, and Comparative Example 2.

[Table 7]

(Table 7) charging amount of precursor during cobalt introduction

| | $WO_3$ wt% | Precursor/mmol | Precursor/g | $NH_4VO_3$/mmol | $NH_4VO_3$/g | Oxalic acid/mmol | Oxalic acid/g |
|---|---|---|---|---|---|---|---|
| Example19 | 4.9 | 0.88 | 0.29 | 43 | 5.04 | 131.70 | 11.86 |
| Example20 | 11.8 | 2.20 | 0.72 | 42 | 4.88 | 131.70 | 11.86 |
| Example21 | 22.1 | 4.39 | 1.43 | 40 | 4.63 | 131.70 | 11.86 |
| Comparative Example1 | 100 | 43.93 | 14.32 | 0.0 | 0.00 | 131.70 | 11.86 |

[Example 22 - not according to the invention]

To a mixture of ammonium vanadate ($NH_4VO_3$), $H_3PW_{12}O_{40} \cdot nH_2O$ and 20 ml of pure water, 11.9 g (131.7 mmol) of oxalic acid (($COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40} \cdot nH_2O$ as raw materials were adjusted so that the total weight ratio by metal oxide ($WO_3$) conversion became 38.4 wt%.

[Comparative Example 3 - not according to the invention]

To a mixture of ammonium vanadate ($NH_4VO_3$), $H_3PW_{12}O_{40} \cdot nH_2O$ and 20 ml of pure water, 11.9 g (131.7 mmol) of oxalic acid (($COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40} \cdot nH_2O$ as raw materials were adjusted so that the total weight ratio by metal oxide ($WO_3$) conversion became 61.7 wt%.

[Comparative Example 4 - not according to the invention]

To a mixture of ammonium vanadate ($NH_4VO_3$), $H_3PW_{12}O_{40} \cdot nH_2O$ and 20 ml of pure water, 11.9 g (131.7 mmol) of oxalic acid (($COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40} \cdot nH_2O$ as raw materials were adjusted so that the total weight ratio by metal oxide ($WO_3$) conversion became 77.3 wt%.

[Comparative Example 5 - not according to the invention]

To a mixture of ammonium vanadate ($NH_4VO_3$), $H_3PW_{12}O_{40} \cdot nH_2O$ and 20 ml of pure water, 11.9 g (131.7 mmol) of oxalic acid (($COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40} \cdot nH_2O$ as raw materials were adjusted so that the total weight ratio by metal oxide ($WO_3$) conversion became 84.4 wt%.

[Comparative Example 6 - not according to the invention]

To a mixture of ammonium vanadate ($NH_4VO_3$), $H_3PW_{12}O_{40} \cdot nH_2O$ and 20 ml of pure water, 11.9 g (131.7 mmol) of oxalic acid (($COOH)_2$) was added, and after stirring at room temperature for 10 minutes, it was stirred for 12 hours at 70°C.

By firing this precursor complex for 4 hours at 300°C, a denitration catalyst of vanadium pentoxide ($V_2O_5$) containing tungsten (W) was obtained.

It should be noted that, for W in the produced denitration catalyst, the amount of ammonium vanadate and $H_3PW_{12}O_{40} \cdot nH_2O$ as raw materials were adjusted so that the total weight ratio by metal oxide ($WO_3$) conversion became about 100 wt%.

It should be noted that Table 8 below shows the charging amount of precursor during tungsten introduction in Example 22, and Comparative Examples 3 to 6.

[Table 8]

(Table 8) charging amount of precursor during cobalt introduction

| | $WO_3$ wt% | Precursor/mmol | Precursor/g | $NH_4VO_3$/mmol | $NH_4VO_3$/g | Oxalic acid/mmol | Oxalic acid/g |
|---|---|---|---|---|---|---|---|
| Example22 | 38.4 | 0.88 | 2.53 | 43.05 | 5.04 | 131.70 | 11.86 |
| Comparative Example3 | 61.7 | 2.20 | 6.33 | 41.73 | 4.88 | 131.70 | 11.86 |

(continued)

(Table 8) charging amount of precursor during cobalt introduction

|  | WO₃ wt% | Precursor/mmol | Precursor/g | NH₄VO₃/mmol | NH₄VO₃/g | Oxalic acid/mmol | Oxalic acid/g |
|---|---|---|---|---|---|---|---|
| Comparative Example4 | 77.3 | 4.39 | 12.65 | 39.54 | 4.63 | 131.70 | 11.86 |
| Comparative Example5 | 84.4 | 6.59 | 18.98 | 37.34 | 4.37 | 131.70 | 11.86 |
| Comparative Example6 | 100 | 4.88 | 14.06 | 0.00 | 0.00 | 131.70 | 11.86 |

3.1.2 Evaluation

3.1.2.1 Outline

Under the conditions of the above Table 1, the $NH_3$-SCR reaction was conducted using a fixed bed flow-type reactor at a reaction temperature of 150°C.
In the gas passing through the catalyst layer, NO was analyzed by a Jasco FT-IR-4700.
In addition, the NO conversion rate was calculated by Formula (1) above.

(Measurement Results)

Table 9 shows the NO conversion rates for both the case of moisture not coexisting and the case of coexistence of moisture of each vanadium pentoxide catalyst.

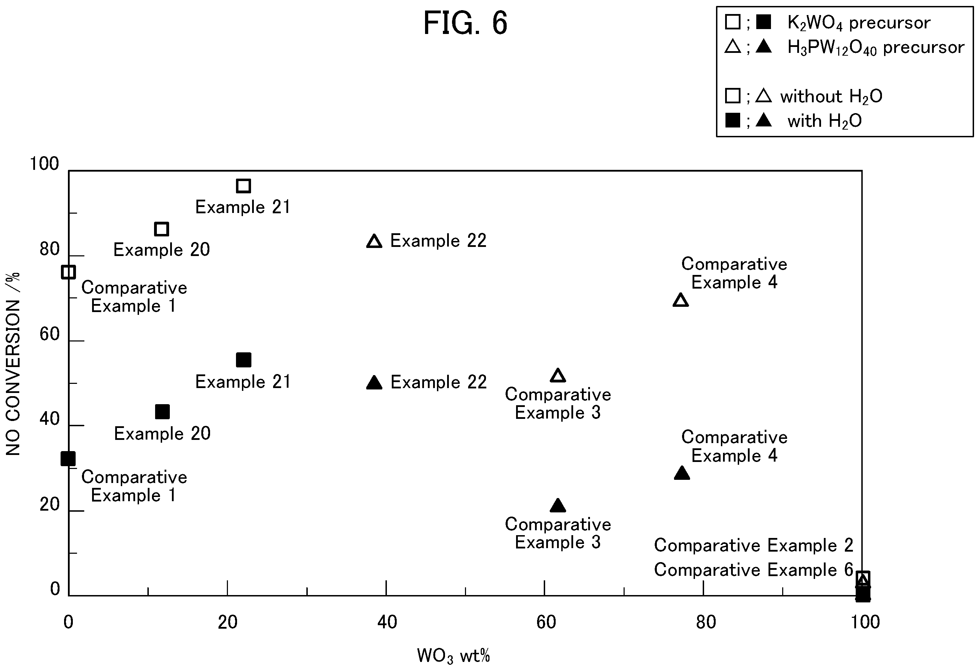

FIG. 6 is a plot graphing this Table 9.

[Table 9]

(Table 9) NOx conversion rate of vanadium pentoxide catalyst

| Sample | | NO conversion rate/% | |
|---|---|---|---|
| | | dry | wet(2.3%) |
| Comparative Example1 | (None) | 76 | 32 |
| Example20 | (12wt%) | 86 | 43 |
| Example21 | (22wt%) | 96 | 55 |
| Example22 | (38wt%) | 83 | 50 |
| Comparative Example3 | (62wt%) | 52 | 21 |
| Comparative Example4 | (77wt%) | 69 | 28 |
| Comparative Example2 | (100wt%) | 4 | 0 |
| Comparative Example6 | (100wt%) | 3 | 0 |

In both the case of moisture not coexisting and the case under coexistence of moisture, when comparing Comparative Example 1 having a tungsten content of 0 wt% and Comparative Examples 2 to 4 and 6 having a tungsten content of 62 wt% to 100 wt%, it generally showed that addition is effective between the added amounts of tungsten of 12 to 38 wt%.
Hereinafter, for each of a case of using $K_2WO_4$ and a case of using $H_3PW_{12}O_{40} \cdot nH_2O$ as the precursor, elemental analysis was conducted by powder X-ray diffraction and SEM-EDS, and the NO conversion rate for every tungsten content ratio was graphed for each case.

3.2.2 Case using $K_2WO_4$ as Precursor

3.2.2.1 Powder X-ray Diffraction and Elemental Analysis

(Measurement Method)

The powder X-ray diffraction, measurement was performed using Cu-K$\alpha$ by a Rigaku Smart Lab.
In addition, elemental analysis by SEM-EDS was conducted.

(Measurement Results)

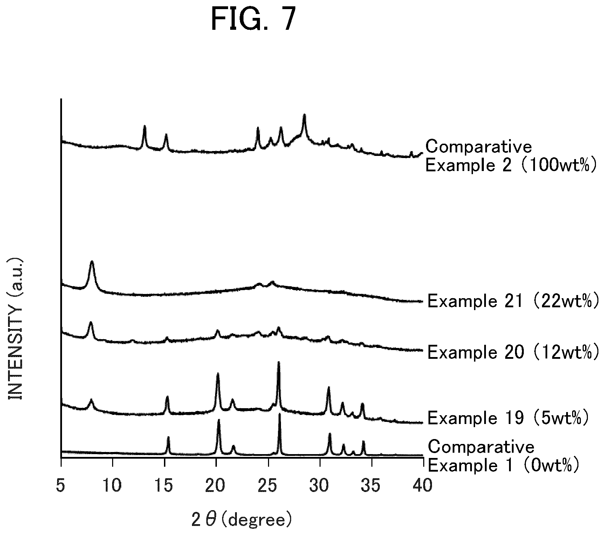

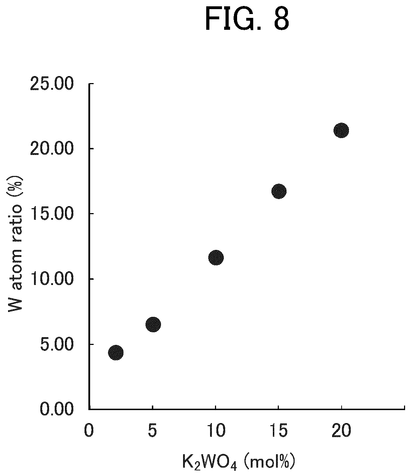

FIG. 7 shows the powder XRD patterns of Example 19 (4.9 wt%), Example 20 (11.8 wt%), Example 21 (22.1 wt%), Comparative Example 1 (0 wt%) and Comparative Example 2 (100 wt%).
In addition, FIG. 8 shows the proportion (%) of tungsten element in the case of establishing the horizontal axis as mol% of $K_2WO_4$.
From FIGS. 7 and 8, it was shown that, by increasing $K_2WO_4$, the crystalline phase became monoclinic $WO_3$ (100 wt%) through triclinic $V_4O_7$ (12 wt%), and the ratio of tungsten atoms included in the catalyst proportionally increased.

3.1.2.2.2 NO Conversion Rate

(Measurement Results)

Table 10 shows the NO conversion rates for both the case of moisture not coexisting and the case of coexistence of moisture of each vanadium pentoxide catalyst.

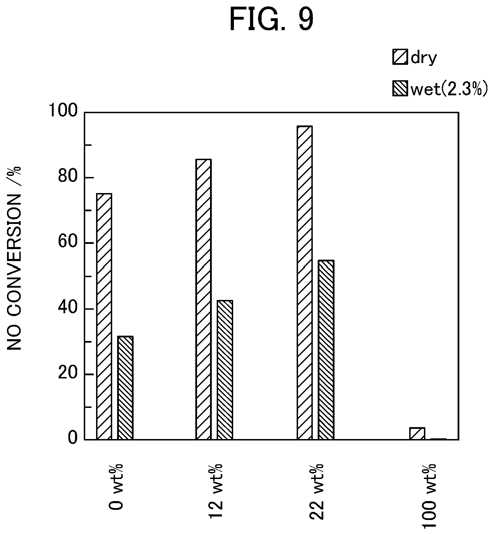

FIG. 9 is a plot graphing this Table 10.

[Table 10]

(Table 10) NOx conversion rate of vanadium pentoxide catalyst

| Sample | | NO conversion rate/% | |
|---|---|---|---|
| | | dry | wet (2.3%) |
| Comparative Example1 | (None) | 76 | 32 |
| Example20 | (12wt%) | 86 | 43 |
| Example21 | (22wt%) | 96 | 55 |
| Comparative Example2 | (100wt%) | 4 | 0 |

As found from Table 10 and FIG. 9, the catalytic activity reached a maximum (96.3%) with triclinic $V_4O_7$ (22.1 wt%).
In addition, the excess $K_2WO_4$ leads to a decline in catalytic activity, and there was no catalytic activity with the content of tungsten of 100 wt%.

3.1.2.3 Case using $H_3PW_{12}O_{40} \cdot nH_2O$ as Precursor

3.1.2.3.1 Powder X-ray Diffraction and Elemental Analysis

(Measurement Method)

The power X-ray diffraction, measurement was performed using Cu-K$\alpha$ by a Rigaku Smart Lab.
In addition, elemental analysis by SEM-EDS was conducted.

(Measurement Results)

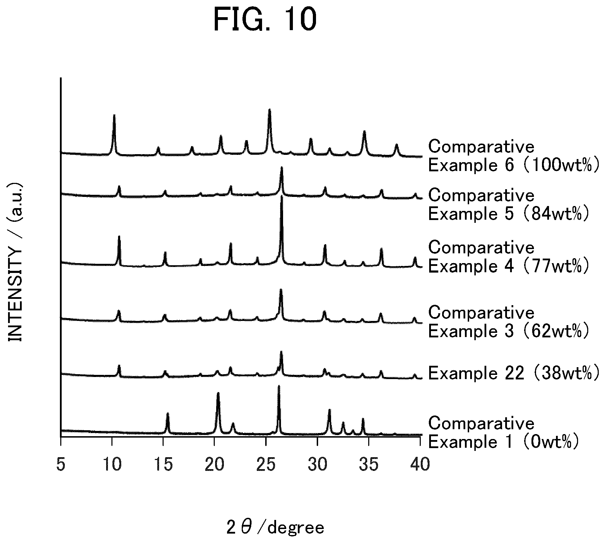

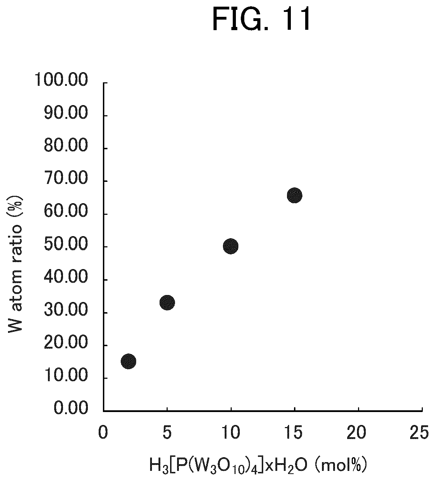

FIG. 10 shows the powder XRD patterns of Example 22 (38.4 wt%), Comparative Example 3 (61.7 wt%), Comparative Example 4 (77.3 wt%), Comparative Example 5 (84.4 wt%) and Comparative Example 6 (100 wt%). In addition, FIG. 11 shows the proportion (%) of tungsten element in the case of establishing the horizontal axis as mol% of $H_3PW_{12}O_{40} \cdot nH_2O$.
From FIGS. 10 and 11, it is shown that by increasing the charging amount of $H_3PW_{12}O_{40} \cdot nH_2O$, the diffraction peak derived from $H_3PW_{12}O_{40} \cdot nH_2O$ became larger, and the content of tungsten became abundant with a charging amount which was a relatively small amount.

3.1.2.3.2 NO Conversion Rate

(Measurement Results)

Table 11 shows the NO conversion rates for both the case of moisture not coexisting and the case of coexistence of moisture of each vanadium pentoxide catalyst.

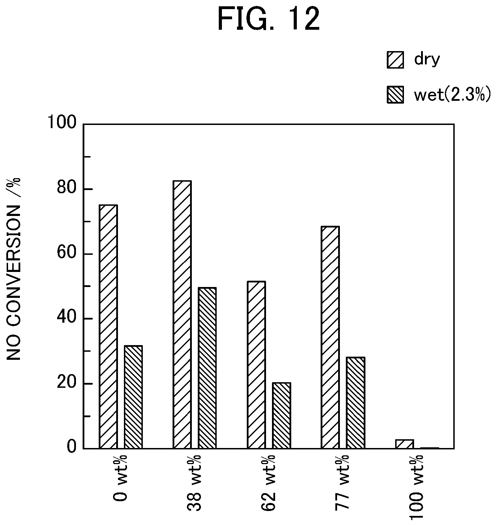

FIG. 12 is a plot graphing this Table 11.

[Table 11]

(Table 11) NOx conversion rate of vanadium pentoxide catalyst

| Sample | | NO conversion rate/% | |
|---|---|---|---|
| | | dry | wet (2.3%) |
| Comparative Example1 | (None) | 76 | 32 |
| Example22 | (38wt%) | 83 | 50 |
| Comparative Example3 | (62wt%) | 52 | 21 |
| Comparative Example4 | (77wt%) | 69 | 28 |
| Comparative Example6 | (100wt%) | 3 | 0 |

As found from Table 11 and FIG. 12, for the case of establishing $H_3PW_{12}O_{40} \cdot nH_2O$ as the precursor, although the catalytic activity reached a maximum (82.9%) with the content of tungsten of 38.4 wt%, the vanadium catalyst establishing $K_2WO_4$ as the precursor and having a content of tungsten of 22.1 wt% had results of higher catalytic activity.

3.2 Case using Metatungstic Acid as Precursor

As mentioned above, during production of the vanadium catalysts of Example 2 and Examples 19 to 22, paratungstic acid was used as precursor.
However, paratungstic acid has a characteristic of the solubility in water not being very high.
For this reason, the possibility of tungsten being mixed nonuniformly in the catalyst was suggested.
The metatungstic acid has a high solubility in water compared to paratungstic acid.
Therefore, vanadium catalyst containing tungsten as the second metal was produced by establishing metatungstic acid as the precursor in place of paratungstic acid.

3.2.1 Each Example and Comparative Example

[Example 23 - not according to the invention]

To a mixture of ammonium vanadate ($NH_4VO_3$), 0.037 mmol of metatungstic acid and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 2.5 wt% (1.0 mol%).

[Example 24 - not according to the invention]

To a mixture of ammonium vanadate ($NH_4VO_3$), 0.073 mmol of metatungstic acid and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 4.9 wt% (2.0 mol%).

[Example 25 - not according to the invention]

To a mixture of ammonium vanadate ($NH_4VO_3$), 0.128 mmol of metatungstic acid and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 8.5 wt% (3.5 mol%).

[Example 26 - not according to the invention]

To a mixture of ammonium vanadate ($NH_4VO_3$), 0.183 mmol of metatungstic acid and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 11.8 wt% (5.0 mol%).

[Example 27 - not according to the invention]

To a mixture of ammonium vanadate ($NH_4VO_3$), 0.256 mmol of metatungstic acid and 20 ml of pure water, 11.9 g (131.7 mmol) of oxalic acid (($COOH)_2$) was added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) was obtained.
It should be noted that, for W in the produced denitration catalyst, the amount of ammonium vanadate as a raw material was adjusted so that the total weight ratio of $WO_3$ by metal oxide ($WO_3$) conversion became 16.1 wt% (7.0 mol%).

[Example 7 - not according to the invention]

To a mixture of 0.17 mmol of ammonium vanadate ($NH_4VO_3$), 0.028 mmol of metatungstic acid and 20 ml of pure water, 0.045 g (0.51 mmol) of oxalic acid (($COOH)_2$) and 1.4 g of titanium oxide powder were added, and after stirring at room temperature for 10 minutes, it was stirred for 12 hours at 70°C.
By firing this precursor complex for 4 hours at 300°C, a denitration catalyst of vanadium pentoxide ($V_2O_5$) containing tungsten (W) loaded on titanium oxide was obtained.

3.2.2 Evaluation

3.2.2.1 NO Conversion Rate

(Measurement Method)

For the tungsten-containing vanadium pentoxide catalysts of Example 25 and Example 2, the $NH_3$-SCR reaction was conducted using a fixed bed flow-type reactor at a reaction temperature of 150°C under the conditions of Table 12 below, under a dry atmosphere in the first stage, under a 10% moisture atmosphere in the second stage, and finally under a dry atmosphere again in the third stage.
In the gas passing through the catalyst layer, NO was analyzed by a Jasco FT-IR-4700.

[Table 12]

(Table 12) $NH_3$-SCR measurement conditions

| |
| --- |
| Reaction tempe 150°C |
| Catalyst amoun0.375g |
| Gas flow rate 250mlmin$^{-1}$ |
| NO: 250ppm, $NH_3$: 250ppm, $O_2$: 4vol% in Ar, 10% $H_2O$ (steam atmosphere) |
| Space velocity 40,000 mLh$^{-1}$g$_{cat}^{-1}$ |

In addition, the NO conversion rate was calculated by Formula (1) above.

(Measurement Results)

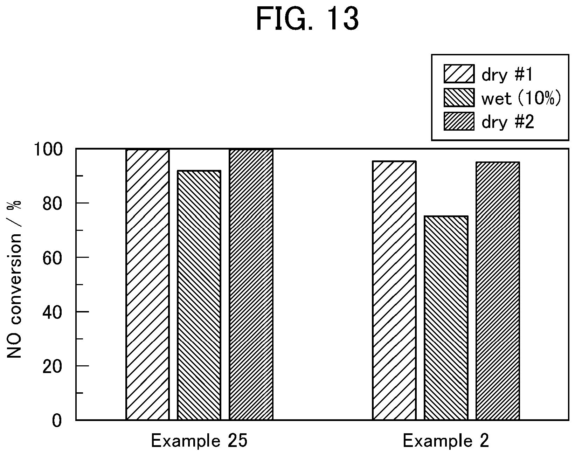

FIG. 13 show the NO conversion rates of the first stage to third stage of each vanadium pentoxide catalyst.
In all stages among the first stage to third stage, the NO conversion rate of vanadium catalyst of Example 25 was higher than the NO conversion rate of vanadium catalyst of Example 2.
In addition, it was shown that, for both the vanadium catalyst of Example 25 and vanadium catalyst of Example 2, under the dry atmosphere after the third stage after subjecting to the 10% moisture atmosphere of the second stage, they returned to a NO conversion rate almost equal to the NO conversion rate under the dry atmosphere of the first stage.

3.2.2.2 Specific Surface Area

(Measurement Method)

For the tungsten-containing vanadium pentoxide catalysts of Example 25 and Example 2, and the vanadium pentoxide catalyst of Comparative Example 1, the specific surface area under a dry atmosphere in the first stage, and under the 10% moisture atmosphere in the second stage, was measured using a fixed bed flow-type reactor at a reaction temperature of 150°C, under the conditions of the above Table 12, similarly to the measurement method of NO conversion rate in 3.2.2.1.

(Measurement Results)

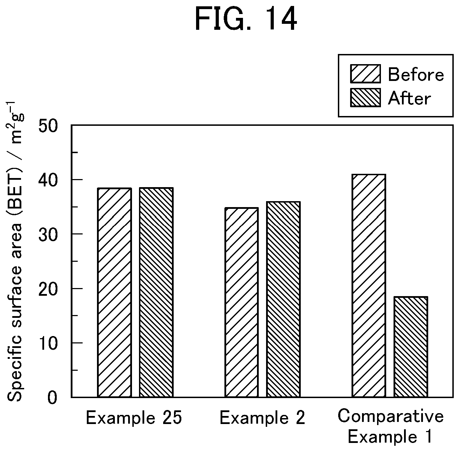

FIG. 14 shows the variation in specific surface area before and after use of each vanadium pentoxide catalyst.
As is evident when comparing Example 25 and Example 2 with Comparative Example 1, the decline in specific surface area before and after use was suppressed by adding tungsten.
In addition, it was shown that the vanadium pentoxide catalyst of Example 25 made using metatungstic acid as a precursor has slightly greater specific surface area than the vanadium pentoxide catalyst of Example 2 made using paratungstic acid as a precursor.

3.2.2.3 Water Concentration Dependency of Catalytic Activity

(Measurement Method)

For the tungsten-containing vanadium pentoxide catalysts of Example 25 and Example 2, and the vanadium pentoxide catalyst of Comparative Example 1, similarly to the measurement method of the NO conversion rate in 3.2.2.1, the NO conversion rate was measured using a fixed bed flow-type reactor at a reaction temperature of 150°C, under the conditions of the above Table 10, under a dry atmosphere in the first stage, under a 20% moisture atmosphere in the second stage, under a 15% moisture atmosphere in the third stage, under a 10% moisture atmosphere in the fourth stage, under a 5% moisture atmosphere in the fifth stage, and under a dry atmosphere again in the sixth stage.

(Measurement Method)

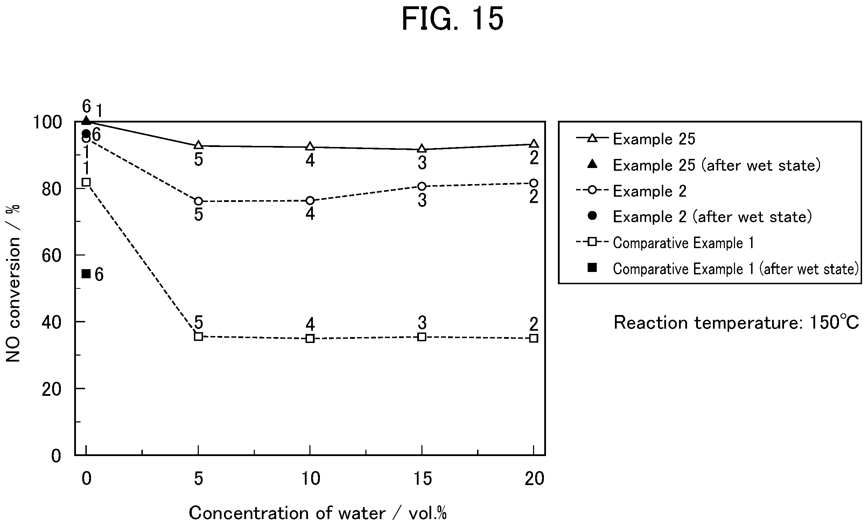

FIG. 15 shows the transition in NO conversion rates in the first to sixth stages of each vanadium pentoxide catalyst.
The tungsten-containing vanadium pentoxide catalyst differs from the vanadium pentoxide catalyst not containing tungsten, and recovered to the original NO conversion rate, even after conducting $NH_3$-SCR reaction under the 20% moisture atmosphere.
In addition, the vanadium pentoxide catalyst of Example 25 made using metatungstic acid as the precursor shows a higher NO conversion rate, than the vanadium pentoxide catalyst of Example 2 made using paratungstic acid as the precursor.

3.2.2.4 Tungsten Amount Dependency of Catalytic Activity

(Measurement Method)

For the tungsten-containing vanadium pentoxide catalysts of Examples 23 to 27, and vanadium pentoxide catalyst of Comparative Example 1, similarly to the measurement method of NO conversion rate in 3.2.2.1, the NO conversion rate was measured using a fixed bed flow-type reactor at a reaction temperature of 150°C under the conditions of the above Table 12, under a dry atmosphere, and under a 10% moisture atmosphere.

(Measurement Results)

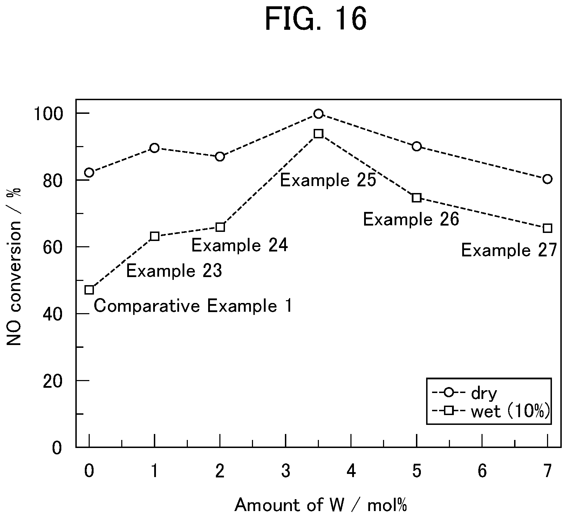

FIG. 16 shows the NO conversion rates under a dry atmosphere and under a 10% moisture atmosphere of each vanadium pentoxide catalyst. Under both a dry atmosphere and a 10% moisture atmosphere, Example 25, i.e. vanadium pentoxide catalyst with 3.5 mol% tungsten addition, showed the highest NO conversion rate, i.e. highest activity.

3.2.2.5 Temperature Dependency of Catalytic Activity

(Measurement Method)

For the tungsten-containing vanadium pentoxide catalyst of Example 25, the vanadium pentoxide catalyst of Comparative Example 1 and the titania-supported tungsten-vanadium catalyst of Comparative Example 7, the $NH_3$-SCR reaction was conducted under a 10% moisture atmosphere, using a fixed bed flow-type reactor at a reaction temperature of 25°C to 245°C under the conditions of Table 13 below. In the gas passing through the catalyst layer, NO was analyzed by a Jasco FT-IR-4700.

[Table 13]

(Table 13) $NH_3$-SCR measurement conditions

| |
|---|
| Reaction tempe 25°C~245°C |
| Catalyst amoun0.375g |
| Gas flow rate 250mlmin$^{-1}$ |
| NO: 250ppm, $NH_3$: 250ppm, $O_2$: 4vol% in Ar, 10% $H_2O$ (steam atmosphere) |
| Space velocity 40,000 mLh$^{-1}$g$_{cat}$$^{-1}$ |

(Measurement Results)

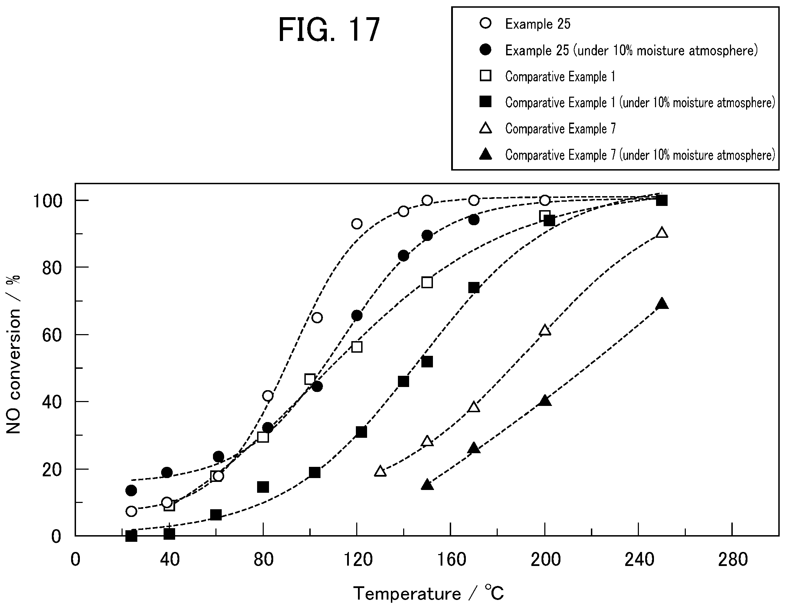

FIG. 17 shows the NO conversion rate at reaction temperatures of 25°C to 245°C of each vanadium pentoxide catalyst.
From FIG. 17, the tungsten-containing vanadium pentoxide catalyst showed high NO conversion rate, high activity, even in a low temperature region, compared to the catalyst loaded on titania.

3.2.2.6 TEM Images of Each Catalyst

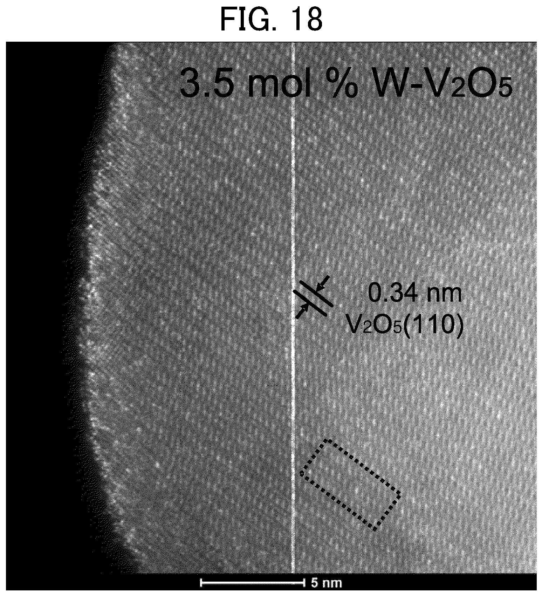

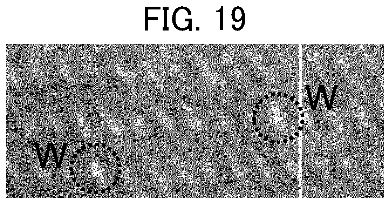

FIG. 18 shows the TEM image of the tungsten-containing vanadium pentoxide catalyst of Example 25.
It should be noted that the magnification is 4,400,000 times.
In addition, FIG. 19 is an enlarged image of the rectangular part shown in FIG. 18.
Each white dot shown in the image of FIG. 18 is an atom of vanadium or tungsten, and above all, the bright points among the white points are atoms of tungsten, as elucidated in FIG. 19.
As is known from FIGS. 18 and 19, tungsten disperses in the form of atoms, in the tungsten-containing vanadium pentoxide catalyst of Example 25.
In addition, in some way or other, tungsten more strongly supports the skeleton of the vanadium pentoxide, and becomes a form in which tungsten substitutes positions of vanadium in the crystallites.

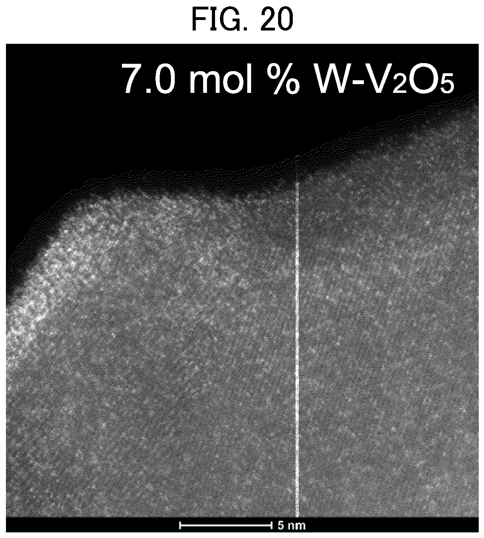

FIG. 20 shows a TEM image of the tungsten-containing vanadium pentoxide catalyst of Example 27.
It should be noted that the magnification is 4,400,000 times.
In FIG. 20, the number of bright points among the white points increases, compared to the tungsten-containing vanadium pentoxide catalyst of Example 25 shown in FIG. 18.
This is because the tungsten sites of cluster form increased by the loading amount of tungsten increasing.

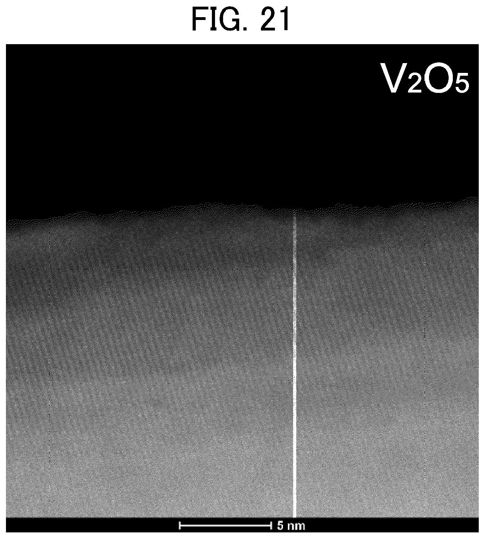

FIG. 21 shows the TEM image of the vanadium pentoxide catalyst not containing tungsten of Comparative Example 1.
It should be noted that the magnification is 4,400,000 times.
In FIG. 21, bright white points such as those found in FIGS. 18 to 20 are not found.
This is because the vanadium pentoxide catalyst of Comparative Example 1 does not contain tungsten.

4 Vanadium Catalyst Containing Niobium as Second Metal

4.1 Each Example

As mentioned above, among the vanadium catalysts of Examples 1 to 11, since Example 4 (adding niobium) showed the third highest NO conversion rate in the case of moisture not coexisting, and showed a relatively high NO conversion rate even in the case of moisture coexisting, vanadium catalysts according to each of the following examples were produced by varying the added amount of niobium.

[Example 28 - not according to the invention]

A precursor complex was synthesized by dissolving ammonium vanadate ($NH_4VO_3$) and oxalic acid (($COOH)_2$) in pure water.
To this precursor complex, oxalic acid complex of niobium (Nb), which is the second metal, was added, so that the $NbO_2O_5$ becomes 1.8 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 29 - not according to the invention]

A precursor complex was synthesized by dissolving ammonium vanadate ($NH_4VO_3$) and oxalic acid (($COOH)_2$) in pure water.
To this precursor complex, oxalic acid complex of niobium (Nb), which is the second metal, was added, so that the $NbO_2O_5$ becomes 5.2 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 30 - not according to the invention]

A precursor complex was synthesized by dissolving ammonium vanadate ($NH_4VO_3$) and oxalic acid (($COOH)_2$) in pure water.
To this precursor complex, oxalic acid complex of niobium (Nb), which is the second metal, was added, so that the $NbO_2O_5$ becomes 8.5 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 31 - not according to the invention]

A precursor complex was synthesized by dissolving ammonium vanadate ($NH_4VO_3$) and oxalic acid (($COOH)_2$) in pure water.
To this precursor complex, oxalic acid complex of niobium (Nb), which is the second metal, was added, so that the $NbO_2O_5$ becomes 11.7 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.

[Example 32 - not according to the invention]

A precursor complex was synthesized by dissolving ammonium vanadate ($NH_4VO_3$) and oxalic acid (($COOH)_2$) in pure water.
To this precursor complex, oxalic acid complex of niobium (Nb), which is the second metal, was added, so that the $NbO_2O_5$ becomes 16.2 wt% by metal oxide conversion.
By firing the obtained vanadium-niobium complex mixture twice for 4 hours at a temperature of 300°C by an electric furnace, a denitration catalyst of vanadium pentoxide ($V_2O_5$) containing niobium (Nb) was obtained.
It should be noted that Table 14 below shows the charging amount of precursor during niobium introduction in Examples 28 to 32.

[Table 14]

(Table 14) charging amount of precursor during niobium introduction

| | Nb$_2$O$_5$ wt% | Niobium precursor /mmol | Niobium precursor /g | NH$_4$VO$_3$ /mmol | NH$_4$VO$_3$ /g | Oxalic acid /mmol | Oxalic acid /g |
|---|---|---|---|---|---|---|---|
| Example28 | 1.8 | 0.54 | 0.16 | 43.6 | 5.10 | 130.8 | 11.77 |
| Example29 | 5.2 | 1.62 | 0.49 | 43.0 | 5.03 | 129.0 | 11.61 |
| Example30 | 8.5 | 2.70 | 0.82 | 42.4 | 4.96 | 127.1 | 11.45 |
| Example31 | 11.7 | 3.78 | 1.14 | 41.8 | 4.89 | 125.3 | 11.28 |
| Example32 | 18.2 | 5.40 | 1. 64 | 40.9 | 4.78 | 122.6 | 11.04 |

4.2 Evaluation

4.2.1 NO Conversion Rate

(Measurement Method)

Under the conditions of the above Table 3, the NH$_3$-SCR reaction was conducted using a fixed bed flow-type reactor at a reaction temperature of 150°C.
In the gas passing through the catalyst layer, NO was analyzed by a Jasco FT-IR-4700.
In addition, the NO conversion rate was calculated by Formula (1) above.

(Measurement Results)

Table 15 shows the NO conversion rates for both the case of moisture not coexisting and the case under coexistence of moisture of each vanadium oxide catalyst.

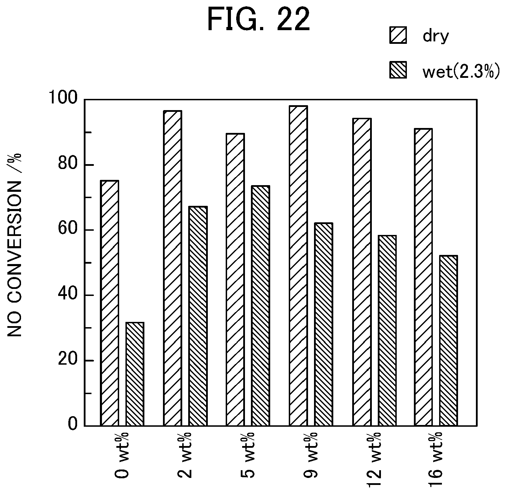

FIG. 22 is a plot graphing this Table 15.

[Table 15]

(Table 15) NOx conversion rate of vanadium pentoxide catalyst

| Sample | | NO conversion rate/% | |
|---|---|---|---|
| | | dry | wet (2.3%) |
| Comparative Example1 | (None) | 76 | 32 |
| Example28 | (2wt%) | 96 | 66 |
| Example29 | (5wt%) | 90 | 73 |
| Example30 | (9wt%) | 97 | 62 |
| Example31 | (12wt%) | 94 | 60 |
| Example32 | (16wt%) | 91 | 52 |

In both the case of moisture not coexisting and the case under coexistence of moisture, the denitration catalyst of the Examples showed higher NO conversion rate than the denitration catalyst of the Comparative Example.
Above all, in the case of moisture not coexisting, Example 30 (9 wt%) showed the highest NO conversion rate, and in the case of moisture coexisting, Example 29 (5 wt%) showed the highest NO conversion rate.

5 Vanadium Catalyst Containing Carbon and Cobalt as Second Metal, and Fired at Low Temperature

5.1 Each Example and Comparative Example

[Example 33 - not according to the invention]

A precursor complex was synthesized by dissolving ammonium vanadate (NH$_4$VO$_3$) and oxalic acid in pure water.
To this precursor complex, ethylene glycol and an oxalic acid complex which is a precursor of cobalt (Co), which is the second metal, were added, so that $Co_3O_4$ becomes 6 wt% by metal oxide conversion.

By firing the obtained catalyst complex for 2 hours at a temperature of 270°C by an electric furnace, a denitration catalyst of vanadium oxide containing carbon and cobalt (Co) was obtained.

It should be noted that Table 16 below shows the charging amount of precursor during cobalt introduction in Example 33.

[Table 16]

(Table 16) Charging amount of precursor

| | $Co_3O_4$ wt% | Co complex | | $NH_4VO_3$ | | Oxalic acid | | Ethylene glycol | |
|---|---|---|---|---|---|---|---|---|---|
| | | mmol | g | mmol | g | mmol | g | mmol | g |
| Example33 | 6 | 2.88 | 1.40 | 41.0 | 4.80 | 123.07 | 11.08 | 13.8 | 0.86 |

5.2 Evaluation

5.2.1 Carbon Content

(Measurement Method)

Upon measurement of carbon content of each vanadium pentoxide catalyst, the carbon content was quantified by elemental analysis of C (carbon), H (hydrogen) and N (nitrogen).

In more detail, in the reaction tube at high temperature inside of a CE-440F made by Exeter Analytical Inc., each denitration catalyst was completely combusted and decomposed to convert the C, H and N which are the main constituent elements into $CO_2$, $H_2O$ and $N_2$, followed by sequentially quantifying these three components in three thermal conductivity detectors to measure the contents of C, H and N in the constituent elements.

(Measurement Results)

The carbon content contained in the vanadium catalyst of Example 33 was 0.70 wt%.

5.2.2 NO Conversion Rate

(Measurement Method)

Under the conditions of the above Table 3, the $NH_3$-SCR reaction was conducted using a fixed bed flow-type reactor at a reaction temperature of 150°C.

In the gas passing through the catalyst layer, NO was analyzed by a Jasco FT-IR-4700.

In addition, the NO conversion rate was calculated by Formula (1) above.

(Measurement Results)

Table 17 shows the NO conversion rates for both the case of moisture not coexisting and the case of coexistence of moisture of each vanadium pentoxide catalyst of Comparative Example 1, Example 15 and Example 33.

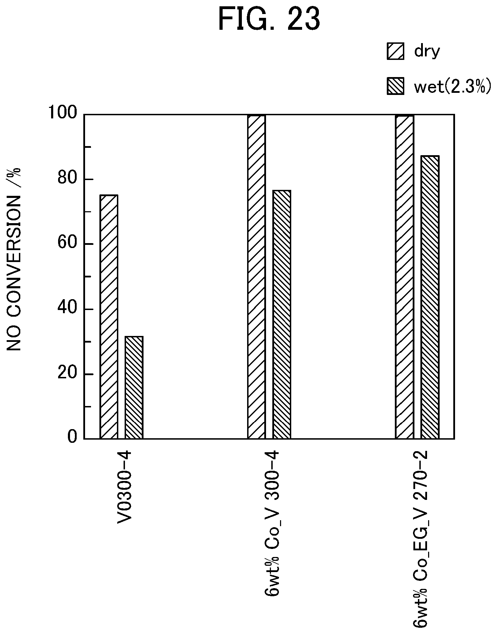

FIG. 23 is a plot graphing this Table 17.

[Table 17]

(Table 17) NOx conversion rate of vanadium pentoxide catalyst

| Sample | | NO conversion rate/% | |
|---|---|---|---|
| | | dry | wet(2.3%) |
| Comparative Examplel | (V300-4) | 76 | 32 |
| Example28 | (6wt% Co_V300-4) | 100 | 77 |
| Example29 | (6wt% Co EG V270-2) | 100 | 89 |

In both the case of moisture not coexisting and the case under coexistence of moisture, the denitration catalyst of Example 33 showed the highest NO conversion rate.

6 Vanadium Catalyst Containing Tungsten as Second Metal and Copper as Third Metal

6.1 Each Example

[Example 34 -according to the invention]

A precursor complex was synthesized by dissolving ammonium vanadate ($NH_4VO_3$) and oxalic acid in pure water.

To this precursor complex, ammonium metatungstate, which is a precursor of tungsten (W) that is the second metal, was added, so that $WO_3$ became 8.4 wt% by metal oxide conversion.

Furthermore, a copper oxalic acid complex which is a precursor of copper (Cu that is the third metal was added, so that CuO became 3.0 wt% by metal oxide conversion.

By firing the obtained catalyst precursor twice for 4 hours at a temperature of 300°C by an electric furnace, a denitration catalyst of vanadium oxide containing tungsten (W) and copper (Cu) was obtained.

6.2 Temperature Dependency of Catalytic Activity

(Measurement Method)

For the tungsten and copper-containing vanadium pentoxide catalyst of Example 34, the tungsten-containing vanadium catalyst of Example 25, and the vanadium pentoxide catalyst of Comparative Example 1, the $NH_3$-SCR reaction was conducted under a 10% moisture atmosphere, using a fixed bed flow-type reactor at a reaction temperature of 25°C to 245°C under the conditions of the above Table 13.

In the gas passing through the catalyst layer, NO was analyzed by a Jasco FT-IR-4700.

(Measurement Results)

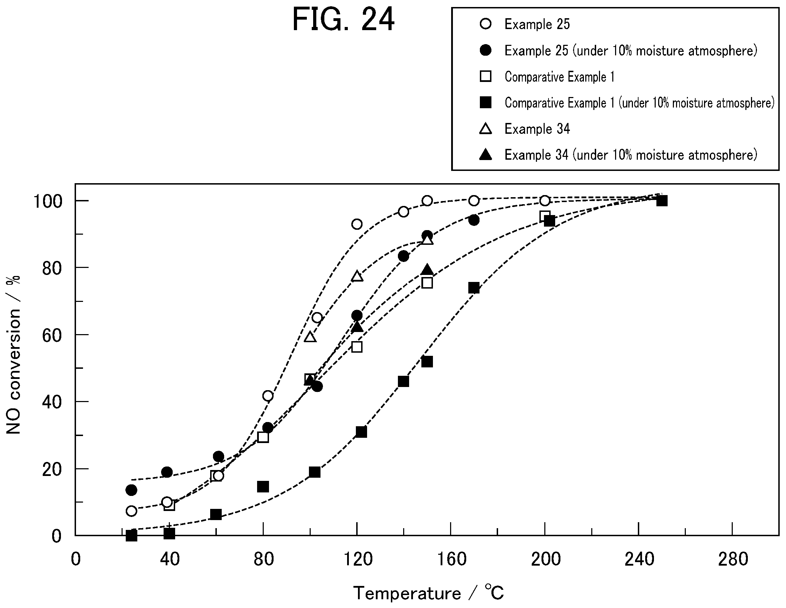

FIG. 24 shows the NO conversion rate at reaction temperatures of 25°C to 245°C of each vanadium pentoxide catalyst.

From FIG. 24, the tungsten and copper-containing vanadium pentoxide catalyst showed a NO conversion rate of 89.2% in the case of no coexistence of moisture, and a NO conversion rate of 79.2% in the case of coexistence of moisture, in the selective catalytic reduction reaction with a reaction temperature no higher than 200°C, using a denitration catalyst having a content of $WO_3$ of 8.4 wt% and content of CuO of 3.0 wt%, when calculating content by oxide conversion of tungsten and copper.

<7 Application Examples>

<7.1 Combustion System>

<7.1.1 First Combustion System>

Hereinafter, a first application example of the present invention will be explained while referencing the drawings.

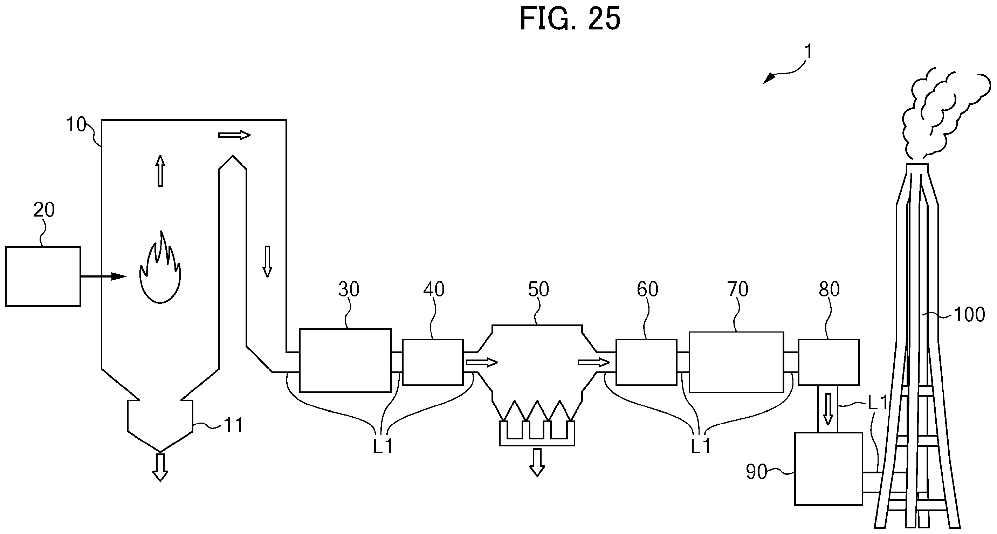

FIG. 25 is a view showing the configuration of a combustion system 1 according to the first application example.

The combustion system 1 is a combustion system establishing pulverized coal as the fuel.

As shown in FIG. 25, the combustion system 1 assumes a thermal power generation system as an example, and includes: a boiler 10 as a combustion device, a coal pulverizer 20, an exhaust channel L1, an air preheater 30, a gas heater 40 as a heat recovery device, a dust collector 50, an induced-draft fan 60, desulfurization equipment 70, a gas heater 80 as a heater, a denitration device 90, and a smoke stack 100.

The boiler 10 combusts the pulverized coal as fuel together with air.

In the boiler 10, exhaust gas is produced by the pulverized coal combusting.

It should be noted that coal ash such as clinker ash and fly ash is produced by pulverized coal combusting.

The clinker ash produced in the boiler 10 is discharged to the clinker hopper 11 arranged below the boiler 10, and is then carried to a coal ash collection silo which is not illustrated.

The boiler 10 is formed in a substantially reversed U-shape as a whole.

The exhaust gas produced in the boiler 10 moves in reverse U shape along the shape of the boiler 10.

The temperature of the exhaust gas near the outlet of the exhaust gas of the boiler 10 is 300 to 400°C, for example.

The coal pulverizer 20 forms pulverized coal by crushing coal supplied from the coal hopper which is not illustrated, into a fine particle size.

The coal pulverizer 20 preheats and dries the pulverized coal, by mixing the pulverized coal and air.

The pulverized coal formed in the coal pulverizer 20 is supplied to the boiler 10 by air being blown.

The exhaust channel L1 has an upstream side connected to the boiler 10.

The exhaust channel L1 is a flow path through which the exhaust gas produced in the boiler 10 flows.

The air preheater 30 is arranged in the exhaust channel L1.

The air preheater 30 performs heat exchange between the exhaust gas and air used for combustion fed from a pusher-type blower which is not illustrated, and recovers heat from the exhaust gas.

The air for combustion is supplied to the boiler 10 after being heated in the air preheater 30.

The gas heater 40 is arranged on the downstream side of the air preheater 30 in the exhaust channel L1.

Exhaust gas which was heat recovered in the air preheater 30 is supplied to the gas heater 40.

The gas heater 40 further recovers heat from the exhaust gas.

The dust collector 50 is arranged on the downstream side of the gas heater 40 in the exhaust channel L1.

The exhaust gas which was heat recovered in the gas heater 40 is supplied to the dust collector 50.

The dust collector 50 is a device which collects dust such as coal ash (fly ash) in the exhaust gas by applying voltage to electrodes.

Fly ash collected in the dust collector 50 is carried to a coal ash collection silo which is not illustrated.

The temperature of exhaust gas in the dust collector 50 is 80 to 120°C, for example.

The induced-draft fan 60 is arranged on the downstream side of the dust collector 50 in the exhaust channel L1.

The induced-draft fan 60 draws in exhaust gas from which fly ash was removed in the dust collector 50 from a first side and sends out to a second side.

The desulfurization equipment 70 is arranged on the downstream side of the induced-draft fan 60 in the exhaust channel L1.

The exhaust gas sent out from the induced-draft fan 60 is supplied to the desulfurization equipment 70.

The desulfurization equipment 70 removes sulfur oxides from the exhaust gas.

In detail, the desulfurization equipment 70 removes sulfur oxides from the exhaust gas, by absorbing sulfur oxides contained in the exhaust gas into a mixed solution, by spraying mixed solution (limestone slurry) of limestone and water to the exhaust gas.

The temperature of exhaust gas in the desulfurization device 70 is 50 to 120°C, for example.

The gas heater 80 is arranged on the downstream side of the desulfurization device 70 in the exhaust channel L1.

The exhaust gas from which the sulfur oxides were removed in the desulfurization equipment 70 is supplied to the gas heater 80.

The gas heater 80 heats the exhaust gas.

The gas heater 40 and gas heater 80 may be configured as gas-gas heaters performing heat exchange between exhaust gas flowing between the air preheater 30 and the dust collector 50 in the exhaust channel L1, and exhaust gas flowing between the desulfurization equipment 70 and denitration device 90 described later.

Above all, the gas heater 80 heats the exhaust gas up to a temperature suited to the denitration reaction of the denitration device 90 at a later stage.

The denitration device 90 is arranged on the downstream side of the gas heater 80 in the exhaust channel L1.

The exhaust gas heated in the gas heater 80 is supplied to the denitration device 90.

The denitration device 90 removes nitrogen oxides from the exhaust gas by way of the denitration catalyst.

The denitration device 90 uses a denitration catalyst containing vanadium oxide as a main component, in which content by oxide conversion of the second metal is at least 1 wt% and no more than 40 wt%, and the second metal is W.

The temperature of exhaust gas in the denitration device 90 is 130 to 200°C, for example.

The denitration device 90 removes nitrogen oxides from exhaust gas by a selective catalytic reduction process.

According to the selective catalytic reduction process, it is possible to remove nitrogen oxides efficiently from exhaust gas, by generating nitrogen and water from the nitrogen oxides by reductant and the above-mentioned denitration catalyst.

The reductant used in the selective catalytic reduction process contains at least one of ammonia and urea.

In the case of using ammonia as the reductant, ammonia in any state of ammonia gas, liquid ammonia and ammonia aqueous solution may be used.

More specifically, the denitration device 90 can be a configuration which injects ammonia gas to the introduced exhaust gas, and then contacts this mixed gas with the denitration catalyst.

For this reason, the denitration device 90 includes one or a plurality of denitration catalyst layers, and these denitration catalyst layers may include a plurality of casings, a plurality of honeycomb catalysts accommodated in this plurality of casing, and a sealing member.

In more detail, the casing is configured from a square tubular metal member in which one end and the other end are open, and may be arranged so that the opened one end and other end are opposite in the flow path of the exhaust gas in the denitration reactor, i.e. so that exhaust gas flows inside of the casing.

In addition, the plurality of casings may be arranged to be connected in an abutted state so as to block the flow path of exhaust gas.

The honeycomb catalyst may be formed in a long shape (rectangular parallelepiped shape) in which a plurality of exhaust gas circulation holes extending in the longitudinal direction is formed, and may be arranged so that the extending direction of exhaust gas circulation holes follows the flow path of exhaust gas.

The smoke stack 100 has a downstream side of the exhaust channel L1 connected.

The exhaust gas from which nitrogen oxides were removed in the denitration device 90 is introduced to the smoke stack 100.

The exhaust gas introduced to the smoke stack 100 is effectively discharged from the top of the smoke stack 100 by the stack effect, by being heated by the gas heater 80.

In addition, by the exhaust gas being heated in the gas heater 80, it is possible to prevent water vapor from condensing above the smoke stack 100 and white smoke generating.

The temperature of exhaust gas near the outlet of the smoke stack 100 is 110°C, for example.

<7.1.2 Second Combustion System>

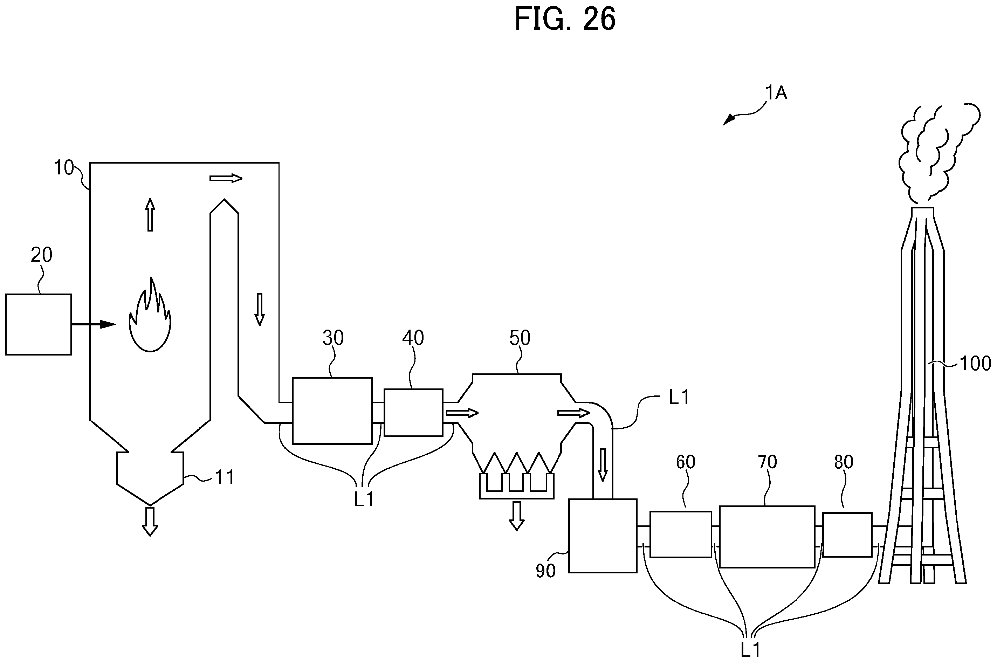

FIG. 26 is a view showing the configuration of a combustion system 1A according to a second application example.

The combustion system 1A is a combustion system establishing pulverized coal as fuel, similarly to the combustion system 1.

In the combustion system 1A, for constituent elements identical to the combustion system 1, the same reference numbers are used, and explanations of the functions thereof will be omitted.

The combustion system 1A differs from the combustion system 1 in the point of the denitration device 90 being installed immediately after the dust collector 50.

Furthermore, the induced-draft fan 60, desulfurization equipment 70, and a gas heater 80 are provided in order from upstream at the downstream of the denitration device 90.

The gas heater 80 in the combustion system 1 heats the exhaust gas up to the temperature suited to the denitration reaction of the denitration device 90 of a later stage.

On the other hand, the gas heater 80 of the combustion system 1A heats the exhaust gas up to the suitable temperature to diffuse from the smoke stack 100 at a later stage.

By installing the denitration device 90 immediately after the dust collector 50, it is possible to set the temperature of exhaust gas in the denitration device 90 as 130 to 200°C, without requiring to provide a gas heater before the denitration device 90.

<7.1.3 Third Combustion System>

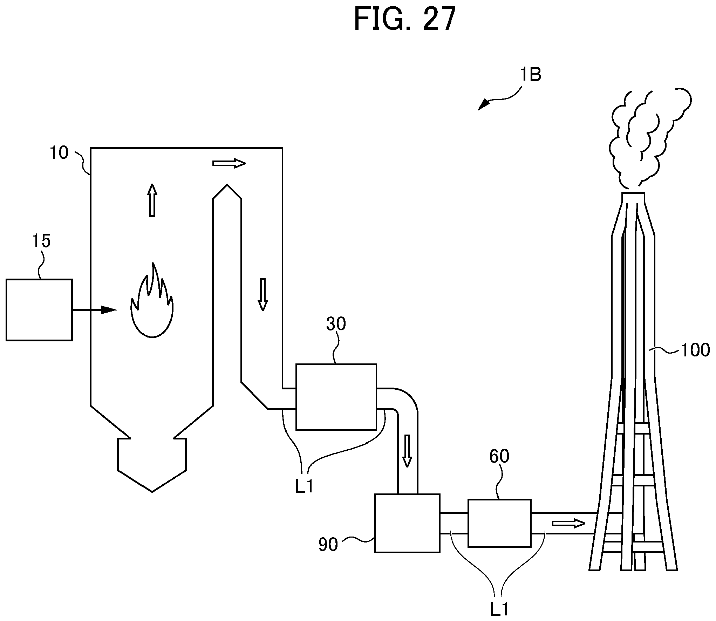

FIG. 27 is a view showing the configuration of a combustion system 1B according to a third application example - not according to the invention.

The combustion system 1B differs from the combustion systems 1 and 1A, and is a combustion system establishing natural gas as the fuel.

In the combustion system 1B, for constituent elements identical to the combustion system 1 and the combustion system 1A, the same reference numbers are used, and explanations of the functions thereof will be omitted.

As shown in FIG. 27, the combustion system 1B includes the boiler 10 as a combustion device, a vaporizer 15 of natural gas, the exhaust channel L1, the air preheater 30, the denitration device 90, the induced-draft fan 60, and the smoke stack 100.

On the other hand, the combustion system 1B does not establish the dust collector and desulfurization equipment as essential constituent elements.

The vaporizer 15 vaporizes natural gas supplied from an LNG tank which is not illustrated and supplies to the boiler 10.

Upon vaporizing, a system using seawater (open rack system) may be used, a system making hot water by heating with a gas burner (submerged combustion system) may be used, or a system performing heat exchange of a plurality of stages using a mediator may be used.

The denitration device 90 is arranged on the downstream side of the air preheater 30 in the exhaust channel L1.

Exhaust gas cooled in the air preheater 30 is supplied to the denitration device 90.

The denitration device 90 removes nitrogen oxides from the exhaust gas by the denitration catalyst.

The temperature of each gas in the denitration device 90 is 130 to 200°C, for example.

The downstream side of the exhaust channel L1 is connected to the smoke stack 100.

Exhaust gas from which nitrogen oxides were removed in the denitration device 90 is introduced to the smoke stack 100.

Due to the temperature of the exhaust gas in the denitration device 90 being 130 to 200°C, for example, the exhaust gas introduced to the smoke stack 100 is effectively discharged from the top of the smoke stack 100 by the stack effect. In addition, the temperature of exhaust gas near the outlet of the smoke stack 100 is 110°C, for example.

By arranging the denitration device 90 on the downstream side of the air preheater 30, the temperature of exhaust gas denitrated by the denitration catalyst becomes lower, and it becomes possible to decrease the deterioration of the denitration catalyst.

<7.1.4 Fourth Combustion System>

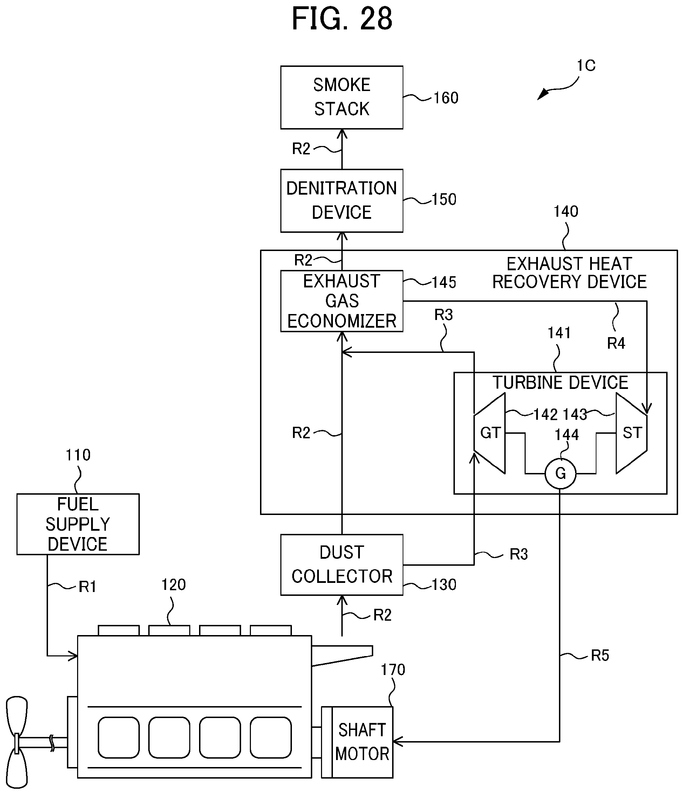

FIG. 28 is a view showing the configuration of a combustion system 1C according to a fourth application example. As shown in FIG. 28, the combustion system 1C is a combustion system used for the propulsion of ships, and includes: a fuel supply device 110, an internal combustion engine 120 as a combustion device, a dust collector 130, an exhaust recovery device 140, a denitration device 150, a smoke stack 160, a shaft motor 170, a fuel channel R1, exhaust channels R2 and R3, a steam channel R4, and a power line R5.

The fuel supply device 110 supplies fuel using the fuel channel R1 to the internal combustion engine 120. As the fuel, for example, it is possible to use petroleum fuel such as light oil or heavy oil.

The fuel channel R1 has an upstream side connected to the fuel supply device 110, and a downstream side connected to the internal combustion engine 120. The fuel channel R1 is a flow path to which fuel is transported from the fuel supply device 110 to the internal combustion engine 120.

The internal combustion engine 120 combusts the petroleum fuel together with air. In the internal combustion engine 120, the exhaust gas is produced by the petroleum fuel combusting. The produced exhaust gas is discharged to the dust collector 130 via the exhaust channel R2. It should be noted that the internal combustion engine 120 may be a 2-stroke low-speed diesel engine used in a large ship, may be a 4-stroke high-speed diesel engine used in a ferry or the like, or may be a 4-stroke high-speed diesel engine used in a high-speed boat or small ship.

The exhaust channel R2 has an upstream side connected to the internal combustion engine 120. The exhaust channel R2 is a flow path through which exhaust gas produced by the internal combustion engine 120 flows.

The dust collector 130 is arranged on the downstream side of the internal combustion engine 120 in the exhaust channel R2, and the exhaust gas discharged from the internal combustion engine 120 is supplied thereto. The dust collector 130 is a device which collects ash dust in the exhaust gas. As the ash dust collection method, for example, a method may be used which charges the ash dust by applying voltage to electrodes, and collects using Coulomb force. Alternatively, a method may be used which collects ash dust by gas-liquid contact, by supplying a ash dust absorption liquid to a venturi portion, and atomizing the ash dust absorption liquid by exhaust gas which reaches high speed by this venturi portion, as in the method conducted by a venturi scrubber.

The exhaust heat recovery device 140 is arranged on the downstream side of the dust collector 130 in the exhaust channel, and exhaust gas from which ash dust was removed by the dust collector 130 is supplied thereto. The exhaust heat recovery device 140 recovers exhaust heat from exhaust gas supplied from the dust collector 130. More specifically, the exhaust heat recovery device 140 includes a turbine device 141 and exhaust gas economizer 145.

The turbine device 141 includes a gas turbine 142, steam turbine 143 and generator 144. The gas turbine 142 and generator 144, and the steam turbine 143 and generator 144 are connected to each other. The gas turbine 142 is driven by exhaust gas supplied from the dust collector 130 through the exhaust channel R3. When the gas turbine 142 is driven, the generator 144 connected to the gas turbine 142 is also driven in connection to perform power generation. In addition, the steam turbine 143 is driven by steam supplied from the exhaust gas economizer 145 described later, through the steam channel R4. When the steam turbine 143 is driven, the generator 144 connected to the steam turbine 143 also operates in connection to perform power generation. The electric power generated by the generator 144 is supplied to the shaft motor 170 through the power line R5.

The exhaust gas economizer 145 generates steam from water stored in a water supply tank (not illustrated), with the exhaust gas supplied from the dust collector 130 through the exhaust channel R2, and exhaust gas supplied from the gas turbine 142 through the exhaust channel R3 as the heat source. The steam generated by the exhaust gas economizer 145 is supplied to the steam turbine 143 through the steam channel R4.

The exhaust channel R3 is a different exhaust channel than the exhaust channel R2, with the upstream side being connected to the dust collector 130 and the downstream side being connected to the exhaust gas economizer 145, and midstream thereof, goes through the gas turbine 142. The exhaust channel R3 is a flow path which flows the exhaust gas supplied from the dust collector 130 to the exhaust gas economizer 145 through the gas turbine 142.

The steam channel R4 has an upstream side connected to the exhaust gas economizer 145, and a downstream side connected to the steam turbine 143.

The steam channel R4 is a flow path through which steam generated by the exhaust gas economizer 145 flows.

The power line R5 has an upstream side connected to the generator 144, and a downstream side connected to the shaft motor 170.

The power line is a flow path through which electricity generated by the generator 144 flows.

The denitration device 150 is arranged on the downstream side of the exhaust heat recovery device 140 in the exhaust channel R2, and the exhaust gas from which exhaust heat was recovered is supplied thereto.

The denitration device 150 removes nitrogen oxides from the exhaust gas by way of the denitration catalyst.

The denitration device 150 uses a denitration catalyst containing vanadium oxide as a main component, in which content by oxide conversion of the second metal is at least 1 wt% and no more than 40 wt%, and the second metal is W.

Since the denitration device 150 is installed on the downstream side of the exhaust heat recovery device 140, the temperature of exhaust gas in the denitration device 150 is 130 to 200°C, for example.

The denitration device 150 removes nitrogen oxides from exhaust gas by way of a selective catalytic reduction process.

According to the selective catalytic reduction process, it is possible to remove nitrogen oxides efficiently from exhaust gas, by generating nitrogen and water from the nitrogen oxides by way of a reductant and denitration catalyst.

The reductant used in the selective catalytic reduction process contains at least one of ammonia and urea.

In the case of using ammonia as the reductant, ammonia in any state of ammonia gas, liquid ammonia and ammonia aqueous solution may be used.

More specifically, the denitration device 150 can be a configuration which injects ammonia gas to the introduced exhaust gas, and then contacts this mixed gas with the denitration catalyst.

The smoke stack 160 is connected at a downstream side of the exhaust channel R2.

The exhaust gas from which nitrogen oxides have been removed in the denitration device 150 is introduced to the smoke stack 160.

The exhaust gas introduced to the smoke stack 160 is effectively discharged from the top of the smoke stack 160 by way of the stack effect, due to the temperature of the exhaust gas in the denitration device 150 being 130 to 200°C, for example.

In addition, it is possible to prevent water vapor from condensing above the smoke stack 160 and white smoke generating.

The temperature of the exhaust gas near the outlet of the smoke stack 160 is 110°C, for example.

The shaft motor 170 is installed on the downstream side of the generator 144 in the power line R5, and is driven so as to aid rotation around the propeller shaft of the internal combustion engine 120.

Electric power is supplied to the shaft motor 170 from the generator 144 through the power line R5, and by using this electric power, drives so as to aid the motive power generated by the internal combustion engine 120.

<7.1.5 Fifth Combustion System>

In addition, although not illustrated, a fifth application example may be a denitration device which equips, to a combustion system that incinerates raw garbage, etc., a denitration catalyst containing vanadium oxide as a main component, in which content by oxide conversion of the second metal is at least 1 wt% and no more than 40 wt%, and the second metal is W.

In the denitration device installed at a later stage than the boiler combusting raw garbage, although the temperature of exhaust gas may be no more than 150°C, since the above-mentioned denitration catalyst can be used in denitration having a reaction temperature of 80 to 150°C, it is useful also for such a denitration system.

<7.2 Denitration Catalyst Made by Coating Catalyst Component on Substrate>

The above-mentioned denitration catalyst is basically powder form; however, for example, a honeycomb-type catalyst made by coating catalyst component on a honeycomb shape substrate may be used in a flue gas denitration apparatus installed at a thermal power plant, as disclosed in Japanese Unexamined Patent Application, Publication No. 2005-199108.

In the present invention, as a sixth application example, it is possible to coat the above-mentioned denitration catalyst as the catalyst component on a substrate.

So long as deformation, etc. does not occur at temperatures of 200°C or higher, any substrate can be used as the above-mentioned substrate.

For example, ceramics, pottery and metals such as titanium may be used as the substrate.

Alternatively, as the substrate, a corrugated honeycomb filter made from a ceramic fiber paper, glass fiber paper, flame-retardant paper, activated carbon paper, deodorizing paper, honeycomb filter nonwoven fabric, felt, or plastic sheet may be used.

Alternatively, the catalyst component of the present invention may be further coated on a new catalyst or a used catalyst.

In addition, the substrate can be made into any form, and can be established as any among a plate-like shape, pellet shape, fluid form, columnar shape, star shape, ring shape, extruded shape, spherical shape, flake shape, pastille shape, rib extruded shape, or ribbed ring shape, for example.

For example, the corrugated honeycomb filter can assume any form such as block type, rotor type, diagonal type, deformed block, strip type and mini pleats.

Alternatively, a powder of the catalyst may be produced in advance, and after dispersing this powder in a volatile organic solvent or the like, may be coated by spray on a molded catalyst.

<7.3 Denitration Catalyst Molded in Block Shape>

Furthermore, a catalyst block such as a honeycomb catalyst may be used in the denitration device equipped to a coal-fired power generation facility; however, in the present invention, it is possible to produce a catalyst block with the above-mentioned denitration catalyst as the catalyst component as a seventh application example, as disclosed in Japanese Unexamined Patent Application, Publication No. 2017-32215, for example.

More specifically, it is possible to produce the catalyst block by mixing and kneading 1 to 50 wt% of CMC (carboxymethyl cellulose) or PVA (polyvinyl alcohol), for example, as a binder to the above-mentioned denitration catalyst of powder form, extrusion molding by a molder such as a pellet mill or vacuum extruder, or press molding, then drying, followed by firing.

It should be noted that, upon firing, since the above-mentioned binder is burned off, the weight ratio of the above-mentioned denitration catalyst in the catalyst block after firing becomes 100 wt%.

In addition, it is possible to produce the catalyst block by, after further mixing titanium molybdenum, tungsten and/or other compounds (particularly oxides), or silica, etc. to the above-mentioned denitration catalyst of powder form, then kneading, and extrusion molding.

Alternatively, the catalyst block may be produced by mixing low-temperature sintered titania and catalyst powder, and extrusion molding.

The catalyst block can assume any form, for example, and it is possible to make into plate-like shape, pellet shape, fluid form, columnar shape, star shape, ring shape, extruded shape, spherical shape, flake shape, honeycomb shape, pastille shape, rib extruded shape, or ribbed ring shape.

In addition, for example, the catalyst block of honeycomb shape may have a honeycomb surface which is a polygonal shape such as triangular, quadrilateral, pentagonal or hexagonal, or circular form.

<7.4 Other Applications>

As applications of the above-mentioned denitration catalyst, a combustion system is mentioned in 6.1, a denitration catalyst made by coating the denitration component on a substrate is mentioned in 6.2, and a denitration catalyst molded into block form is mentioned in 6.3; however, the applications of the denitration catalyst are not limited thereto.

For example, a combustion system with pulverized coal as the fuel is mentioned in 6.1.1 and 6.1.2, and a combustion system with natural gas as the fuel is mentioned in 6.1.3; however, the above-mentioned denitration catalyst may be used in a combustion system using oil or biomass fuel in place of pulverized coal or natural gas.

In addition, a combustion system used for the propulsion of ships was mentioned in 6.1.4; however, the above-mentioned denitration catalyst may be used in a combustion system used for propelling automobiles instead of ships.

According to the combustion system related to the above-mentioned application examples, the following effects are exerted.

(1) As mentioned above, the combustion system 1 according to the above application example arranged the denitration device 90 on the downstream side of the dust collector 50, in the exhaust channel L1 through which exhaust gas generated in the boiler (combustion device) 10 flows.

Furthermore, in the above embodiment, the denitration device 90 uses a denitration catalyst containing vanadium oxide as a main component, in which content by oxide conversion of a second metal is at least 1 wt% and no more than 40 wt%, and the second metal is W.

By using the above-mentioned denitration catalyst, the combustion system 1 according to the above embodiment can exhibit an effect whereby the denitration efficiency at low temperature is even higher compared to the conventional technology, upon a selective catalytic reduction reaction at 200°C or lower with ammonia as the reductant.

(2) The combustion system 1A according to the above application example further includes the air preheater 30 which recovers heat from the exhaust gas, and the air preheater 30 is arranged on the upstream side of the dust collector 50.

By the exhaust gas which has been heat recovered by the air preheater 30 being supplied to the dust collector 50, the load on the dust collector 50 by the heat of exhaust gas can be suppressed.

In addition, since the denitration device 90 is not arranged upstream of the air preheater 30 which is normally arranged near the boiler (combustion device) 10 in the exhaust channel L1, clogging of the air preheater 30 caused by ammonium sulfate produced by ammonia and sulfur component in exhaust gas reacting will not occur.

The cost of operation of the combustion system 1A is thereby low.

(3) The combustion system 1B according to the above application example arranges the denitration device 90 on the downstream side of the air preheater 30, in the exhaust channel L1 through which exhaust gas produced in the boiler (combustion device) 10 flows. Furthermore, the above-mentioned embodiment uses a denitration catalyst containing vanadium oxide in the denitration device 90, in which content by oxide conversion of the second metal is at least 1 wt% and no more than 40 wt%, and the second metal is W.

By using the above-mentioned denitration catalyst, the combustion system 1A according to the above embodiment can exhibit an effect whereby the denitration efficiency at low temperature is even higher compared to the conventional technology, upon selective catalytic reduction reaction at 200°C or lower with ammonia as the reductant. In addition, since it is thereby possible to arrange the denitration device 90 on the downstream side of the air preheater 30, the temperature of the exhaust gas denitrated by the denitration catalyst is lower, and it is possible to decrease deterioration of the denitration catalyst.

In addition, the combustion system 1 of the above embodiment does not establish the dust collector and desulfurization device as essential constituent elements.

Therefore, by simplifying the configuration of the combustion system 1B, it becomes possible to lower the installation cost.

(4) The combustion system 1C according to the above-mentioned application example includes: the exhaust channel R2 through which exhaust gas generated by fuel combusting in the internal combustion engine 120 flows; the exhaust heat recovery device 140 which is arranged in the exhaust channel R2 and recovers exhaust heat from the exhaust gas discharged from the internal combustion engine 120; and the denitration device 150 which is arranged in the exhaust channel R2 and removes nitrogen oxides from exhaust gas by way of the denitration catalyst, in which the denitration device 150 is arranged on the downstream side of the exhaust heat recovery device 140 in the exhaust channel R2, and the denitration catalyst contains vanadium oxide as a main component, a content by oxide conversion of a second metal is at least 1 wt% and no more than 40 wt%, and the second metal is W.

By using the above-mentioned denitration catalyst, the combustion system 1C according to the above embodiment can exhibit an effect whereby the denitration efficiency at low temperature is even higher compared to the conventional technology, upon selective catalytic reduction reaction at 200°C or lower with ammonia as the reductant. Furthermore, immediately before introducing exhaust gas to the denitration device 150, it is not essential to heat the exhaust gas. Since the denitration catalyst is thereby no longer exposed to high temperatures, the deterioration of denitration catalyst is decreased, and the cost of operation of the combustion system 1C becomes lower. In addition, the combustion system 1C of the above embodiment can be made a more compact configuration by the amount by which heaters for warming the exhaust gas are not essential.

It thereby becomes possible to install the combustion system with a denitration device in a narrow space such as that of a ship.

(5) As mentioned above, it is preferable for the exhaust heat recovery device 140 to include the turbine device 141 and exhaust gas economizer 145, in which the exhaust gas economizer 145 produces steam with exhaust gas discharged from the internal combustion engine 120 and exhaust gas supplied from the turbine device 141 as heat sources, and the turbine device 141 conducts power generation using the exhaust gas discharged from the internal combustion engine 120 and steam supplied from the exhaust gas economizer 145.

The exhaust heat recovery device 140 in the above embodiment can more effectively use the heat energy generated by combustion of fuel in the internal combustion engine 120, by including the turbine device 141 and exhaust gas economizer 145.

(6) As mentioned above, in the denitration catalyst used in the combustion system according to the above embodiment, the second metal is W.

By using this denitration catalyst, it is possible to further exhibit an effect whereby the denitration efficiency at low temperature is even higher compared to the conventional technology.

In addition, the absorption of NO tends to occur, and this denitration catalyst can further exhibit an even higher NO conversion rate.

(7) As mentioned above, in the denitration catalyst used in the combustion system according to the above embodiment, the second metal is W, and further contains Cu as a third metal.

By using this denitration catalyst, it is possible to further exhibit an effect whereby the denitration efficiency at low temperature is even higher compared to the conventional technology.

In addition, absorption of NO tends to occur even more, and NO further oxidizes to $NO_2$, whereby this denitration catalyst can further exhibit a higher NO conversion rate by a catalytic reaction mechanism under NO and $NO_2$ coexistence.

(8) As mentioned above, the denitration catalyst used in the combustion system according to the above embodiment contains an oxide of a composite metal of vanadium and the second metal.

By using this denitration catalyst, it is possible to further exhibit an effect whereby the denitration efficiency at low temperature is even higher compared to the conventional technology.

In addition, the absorption of NO tends to occur, and this denitration catalyst can further exhibit an even higher NO conversion rate.

EXPLANATION OF REFERENCE NUMERALS

1, 1A, 1B, 1C combustion system
10 boiler
15 vaporizer
30 air preheater
50 electrostatic precipitator
90, 150 denitration device
100, 160 smoke stack
110 fuel supply device
120 internal combustion engine
130 dust collector
140 exhaust heat recovery device
141 turbine device
145 exhaust gas economizer
170 shaft motor

**Claims**

1. A combustion system (1) comprising:

   a combustion device (10) which combusts a fuel;
   an exhaust channel (L1) through which exhaust gas generated by the fuel combusting in the combustion device (10) flows;
   a dust collector (50) which is disposed in the exhaust channel (L1), and collects ash dust in the exhaust gas; and
   a denitration device (90) which is disposed in the exhaust channel (L1), and removes nitrogen oxides from the exhaust gas by way of a denitration catalyst,
   wherein the denitration device (90) is disposed on a downstream side of the dust collector (50) in the exhaust channel (L1), and
   wherein the denitration catalyst contains vanadium oxide as a main component in a content of at least 50 wt% by vanadium pentoxide conversion, a content by oxide conversion of a second metal is at least 1 wt% and no more than 40 wt%, the second metal is W, and the denitration catalyst further comprises Cu as a third metal.

2. The combustion system (1) according to claim 1, wherein the combustion system (1) further includes an air preheater (30) disposed in the exhaust channel (L1), and recovers heat from the exhaust gas, and
   wherein the air preheater (50) is disposed on an upstream side of the dust collector (50).

3. The combustion system according to claim 1 or 2, wherein the denitration catalyst contains a composite oxide of vanadium and the second metal.

**Patentansprüche**

1. Verbrennungssystem (1), aufweisend:

   eine Verbrennungsvorrichtung (10), in der ein Kraftstoff verbrannt wird;
   einen Abgaskanal (L1), durch den ein Abgas strömt, das durch den in der Verbrennungsvorrichtung (10) verbrennenden Kraftstoff erzeugt wird,

einen Staubabscheider (50), der in dem Abgaskanal (L1) angeordnet ist und Aschestaub im Abgas auffängt; und eine Denitrierungsvorrichtung (90), die in dem Abgaskanal (L1) angeordnet ist und mittels eines Denitrierungskatalysators Stickoxide aus dem Abgas entfernt,

wobei die Denitrierungsvorrichtung (90) auf einer stromabwärts liegenden Seite des Staubabscheiders (50) in dem Abgaskanal (L1) angeordnet ist, und

wobei der Denitrierungskatalysator Vanadiumoxid als Hauptkomponente mit einem Gehalt von mindestens 50 Gew.-% durch Vanadiumpentoxidumwandlung enthält, ein Gehalt durch Oxidumwandlung eines zweiten Metalls mindestens 1 Gew.-% und nicht mehr als 40 Gew.-% beträgt, es sich bei dem Metall um Wolfram handelt und der Denitrierungskatalysator darüber hinaus Kupfer als drittes Metall aufweist.

2. Verbrennungssystem (1) nach Anspruch 1, wobei das Verbrennungssystem (1) darüber hinaus einen Luftvorwärmer (30) umfasst, der in dem Abgaskanal (L1) angeordnet ist und Wärme aus dem Abgas zurückgewinnt, und wobei der Luftvorwärmer (30) auf einer stromaufwärts liegenden Seite des Staubabscheiders (50) angeordnet ist.

3. Verbrennungssystem nach Anspruch 1 oder 2, wobei der Denitrierungskatalysator ein Verbundoxid aus Vanadium und dem zweiten Metall enthält.

**Revendications**

1. Système de combustion (1), comprenant :

un dispositif de combustion (10) dans lequel un carburant est brûlé ;
un conduit d'échappement (L1) à travers lequel s'écoule un gaz d'échappement produit par le carburant brûlé dans le dispositif de combustion (10) ;
un séparateur de poussière (50) disposé dans le conduit d'échappement (L1) et capturant les poussières de cendres dans le gaz d'échappement ; et
un dispositif de dénitrification (90) disposé dans le conduit d'échappement (L1) et éliminant les oxydes d'azote des gaz d'échappement à l'aide d'un catalyseur de dénitrification,
le dispositif de dénitrification (90) étant disposé en aval du séparateur de poussière (50) dans le conduit d'échappement (L1), et
le catalyseur de dénitrification contenant de l'oxyde de vanadium comme composant principal avec une teneur d'au moins 50 % en poids par conversion de pentoxyde de vanadium, une teneur par conversion d'oxyde d'un deuxième métal étant d'au moins 1 % en poids et d'au plus 40 % en poids, le métal étant le tungstène, et le catalyseur de dénitrification comprenant en outre du cuivre comme troisième métal.

2. Le système de combustion (1) selon la revendication 1, sachant que le système de combustion (1) comprend en outre un préchauffeur d'air (30) disposé dans le conduit d'échappement (L1) et récupérant la chaleur des gaz d'échappement, et sachant que le préchauffeur d'air (30) est disposé en amont du séparateur de poussière (50).

3. Le système de combustion selon la revendication 1 ou 2, sachant que le catalyseur de dénitrification contient un oxyde composite de vanadium et du deuxième métal.

# FIG. 1

FIG. 2

# FIG. 3

# FIG. 4

# FIG. 5A

# FIG. 5B

FIG. 6

# FIG. 7

INTENSITY (a.u.) — $2\theta$ (degree)

Comparative Example 2 (100wt%)

Example 21 (22wt%)

Example 20 (12wt%)

Example 19 (5wt%)

Comparative Example 1 (0wt%)

# FIG. 8

# FIG. 9

# FIG. 10

Comparative Example 6 (100wt%)

Comparative Example 5 (84wt%)

Comparative Example 4 (77wt%)

Comparative Example 3 (62wt%)

Example 22 (38wt%)

Comparative Example 1 (0wt%)

INTENSITY / (a.u.)

$2\theta$ /degree

# FIG. 11

# FIG. 12

# FIG. 13

# FIG. 14

FIG. 15

# FIG. 16

FIG. 17

FIG. 18

FIG. 19

FIG. 20

7.0 mol % W-V$_2$O$_5$

5 nm

## FIG. 21

# FIG. 22

# FIG. 23

FIG. 24

# FIG. 25

EP 3 936 706 B1

# FIG. 26

EP 3 936 706 B1

# FIG. 27

# FIG. 28

**EP 3 936 706 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004275852 A
- JP 6093101 B
- CN 103623814 B
- US 2019055871 A1
- JP 2014034887 A
- KR 20120056476 A
- JP 2005199108 A
- JP 2017032215 A

### Non-patent literature cited in the description

- **MEIQING SHEN**. New insight into the promotion effect of Cu dopedV2O5/ WO3 TiO2 for low temperature NH3-SCRperformance. *RSC ADVANCES*, 07 April 2015, vol. 5, 35155-35165